# EUROPEAN PATENT APPLICATION

(11) **EP 4 657 107 A1**
(43) Date of publication of application: **03.12.2025**
(21) Application number: 24178637.5
(22) Date of filing: 28.05.2024
(51) Int. Cl.: G01S 5/02, G01S 11/02, G06N 3/00

(54) **POSITION PREDICTION METHOD AND DEVICE**

(71) Applicant: Einhell Germany AG, 94405 Landau / Isar (DE)
(72) Inventor: Klement, Kilian, 94405 Landau / Isar (DE); Reitmeier, Richard, 94405 Landau / Isar (DE)
(74) Representative: Hofstetter, Schurack & Partner

(57) **Abstract**

Described is a computer-implemented position prediction method (200) comprising a machine-learning model (300) configured to correct UWB-measured distance data (22) and/or pose data (23) of an autonomous robotic platform (10) indicating the distance and/or pose of the autonomous robotic platform (10) relative to at least a first UWB beacon (4a) and a second UWB beacon (4b) and for assigning at least one quality indicator to the UWB-measured distance data (22) and/or pose data (23) indicating the quality of a certain predicted distance (24), predicted position (25) and/or predicted pose (26), the method (200) comprising the steps of:
- transforming (206) the UWB-measured distance data (22) into distance distributions (350) by assigning the at least one quality indicator of the UWB-measured distance data (22) to the UWB-measured distance data (22); and/or transforming (206) the UWB-measured pose data (23) into pose distributions (351) by assigning the at least one quality indicator of the UWB-measured pose data (23) to the UWB-measured pose data (23); and
- determining (208) the most-likely position (25) in the local coordinate system by optimizing a cost function; and/or determining (208) the most-likely pose of the autonomous robotic platform (10) in the local coordinate system by optimizing a cost function.

## Description

The invention is in the field of position prediction and respective devices and systems. The invention refers to a computer-implemented position prediction method. The invention refers to a computer-implemented training method. The invention refers to an electronic signal. The invention refers to an autonomous robotic platform. The invention refers to a data processing apparatus. The invention refers to computer program product. The invention refers to a dataset.

In the state-of-the-art positioning of robotic platforms based on UWB and GPS RTK systems is known. RTK GPS (Real-Time Kinematic Global Positioning System) is a type of GPS system that can be used for positioning, particularly in surveying, construction, and agriculture applications. It uses measurements from multiple GPS satellites and additional data from an onboard receiver to provide real-time corrections to the raw satellite signals, resulting in positioning data. The RTK GPS system is used for outdoor robotic systems, where it provides positioning information even down to parts of a meter and/or centimeter-level accuracy.

However, RTK GPS systems have limitations when used indoors or in environments with obstructions such as trees and buildings. They also tend to be relatively expensive and power-hungry, which can limit their use in certain applications.

Classical trilateration based on UWB (Ultra-Wideband) systems and anchors is another method that can be used in positioning. In this approach, the location of an object is determined by measuring distances to at least two, further particular at least three anchors that have known positions. The measurements can then be used to calculate the object's position using basic trilateration techniques. However, classical trilateration based on UWB systems can be affected by a number of factors, including multipath propagation and other interference sources, which can lead to inaccurate positioning estimates.

In order to address these limitations, there is a need for improved methods for robotic platform positioning that are more flexible and cost-effective than RTK GPS systems while also providing better accuracy and reliability than classical trilateration based on UWB systems.

It is an object of the invention to provide alternatives for positioning being more flexible and cost-effective for a wider range of robotic platform applications.

The object of the invention is solved in particular by a method with the features according to claim 1. The object of the invention is solved in particular by a method with the features according to claim 16. The object of the invention is solved in particular by an electronic signal with the features according to claim 17. The object of the invention is solved in particular by an autonomous platform with the features according to claim 18. The object of the invention is solved in particular by a data processing apparatus with the features according to claim 19. The object of the invention is solved in particular by a computer program product with the features according to claim 20. The object of the invention is solved in particular by a dataset with the features according to claim 21. Further, - particularly optional - features, - particularly explanatory - details and - particularly exemplary - embodiments of the invention are described in the dependent claims, the description and the drawings. Features and details that are described in light of at least one of the methods apply to the robotic platform, the computer program product, the storage device, the data processing apparatus, the electronic signal and the data set as described in part or in total in the following elsewhere herein. This also applies the other way around, so that with regard to the description of the individual aspects of the invention, reference is or can always be made reciprocally. Features, technical effects, advantages and details described with one aspect may be transferred to any of the other aspects, particularly independent of their respective category - device, system, method and use.

According to one aspect, the object is solved in particular by a method with the features according to claim 1.

A computer-implemented position prediction method can be provided comprising a machine-learning model configured to correct UWB-measured distance data of an autonomous robotic platform indicating the distance of the autonomous robotic platform relative to at least a first UWB beacon and a second UWB beacon. Alternatively or additionally, the method can be configured to correct UWB-measured pose data of an autonomous robotic platform indicating the pose of the autonomous robotic platform relative to at least a first UWB beacon and/or a second UWB beacon. The method may be configured for assigning at least one quality indicator to the UWB-measured distance data indicating the quality of a certain predicted distance. Alternatively or additionally, the method may be configured for assigning at least one quality indicator to the UWB-measured pose data indicating the quality of a certain predicted pose. The method may comprise the step of providing to the machine-learning model UWB-measured distance data indicating distances between the autonomous robotic platform and at least a first UWB beacon and a second UWB beacon. The distances particularly function as local coordinate system. Additionally or alternatively, the method may comprise the step of providing to the machine-learning model UWB-measured pose data indicative of a pose of the autonomous robotic platform relative to at least a first UWB beacon and/or a second UWB beacon. The method may comprise a step of correcting the UWB-measured distance data. Alternatively or additionally, the method may comprise a step of correcting the UWB-measured pose data. The method may comprise a step of transforming the UWB-measured distance data into distance distributions by assigning the at least one quality indicator of the UWB-measured distance data to the UWB-measured distance data. Additionally or alternatively, the method may comprise a step of transforming the UWB-measured pose data into pose distributions by assigning the at least one quality indicator of the UWB-measured pose data to the UWB-measured pose data. The method may comprise a step of determining the most-likely position of the autonomous robotic platform in the local coordinate system by optimizing a cost function. Alternatively or additionally, the method may further comprise a step of determining the most-likely pose of the autonomous robotic platform in the local coordinate system by optimizing a cost function.

The aspects - in part or in full - described herein allow to improve position prediction and/or pose prediction particularly by using machine learning (ML) models to correct UWB distance/pose measurements and assign quality indicators to the resulting data, thereby improving the variability and flexibility of positioning for robotic platforms.

The described embodiments allow positioning applications, wherein method steps can be provided to accurately quantify uncertainty in ML models when making predictions. There are particularly two types of uncertainty: aleatoric (intrinsic to the observed event) and epistemic (due to a lack of knowledge). It is unrealistic to expect that every measurement can be corrected to an extremely low deviation from the true distance, even with a large amount of diverse training data. The ML model's uncertainty can be related to the measurement conditions reflected in the input parameters. Measurements in direct line of sight conditions with no interference are easier to correct for example than those in non-line of sight conditions, which can be more noisy. This type of uncertainty is aleatoric and cannot be eliminated when making predictions. The model can be trained accordingly as described elsewhere herein, thus that it can be expected that measurements with a higher assigned uncertainty deviate more from the true distance, and an expected variance can correlate with the residual error after correction.

If there are no training samples available with certain input features, the model has particularly very little knowledge about how those samples may be distributed, resulting in high epistemic uncertainty. Since models can struggle to extrapolate beyond their training data, predictions for samples with input features that deviate from the training samples should be given a high uncertainty as accuracy on those samples may be poor. However, this uncertainty can be reduced if the training set includes samples from the relevant feature space. The described method may provide a ML model - particularly also trained as described with respect to a training method elsewhere herein - which may no longer tend to be bad at admitting their lack of knowledge. Instead the ML model may assign corresponding (very high) variance to predictions for samples that are far from those observed during training. This is a desired behavior for the respective ML model.

To obtain information about aleatoric uncertainty, a node or parameter can be included in the output layer of the ML model which can measure variance. During training, a loss function based on the log likelihood of the predicted distribution for the observed true label, rather than other metrics like Mean Squared Error, can be used. This allows the ML model to automatically learn the relationship between input parameters and expected distributions. However, the model's output may still be very poor for unseen data.

The methods, devices and/or systems enable accurate positioning in up to three dimensions in a local reference frame of an autonomous robotic platform using low-cost sensors. This may allow to not mandatorily rely on the means of particularly more expensive RTK GPS systems, which can have glaring disadvantages when used in typical home user environments as described elsewhere herein. A more accurate and reliable method for predicting the position and/or pose of an autonomous robotic platform can be provided, particularly based on using UWB measurements. By utilizing machine-learning techniques, the method can correct for errors and/or inaccuracies in the UWB data and assign quality indicators to the distance data and/or pose data. The use of a local coordinate system based on the UWB beacons also allows for more precise positioning and pose determination. This may improve accuracy, reliability, and precision in predicting the position and/or pose of an autonomous robotic platform. Additionally, the method is particularly more flexible and adaptable than traditional methods that rely solely on UWB measurements or other types of distance or pose measurement without a respective ML model as described elsewhere herein. The use of these machine-learning techniques/models also allows for the method to be continuously improved and updated as new data may become available.

Particularly, due to the (significantly) improved distance measurements and the detection of potentially bad measurements via a predicted uncertainty of the measurement, robust positions can be calculated, which are most probable for the given measurement values of the considered anchor constellation. In addition, the uncertainty of the final position can be captured as a covariance matrix, which can be used for further processing of the position data in a Kalman filter and thus may improve both the final position and/or pose accuracy and the final estimate of the associated uncertainty.

The methods, devices and/or systems may lead to more accurate and robust positioning with conditional uncertainty that particularly takes into account both the constellation of static UWB transceivers, also called anchors, and one or more dynamic UWB transceivers, also called tags, and conditional measurement uncertainty of the individual anchor measurements. Tags may be placed on posts that can be placed in an area wherein the autonomous robotic platform may have to navigate. The anchors may be placed on a base station of the autonomous robotic platform. In embodiments there might be no distinction between anchors and tags as both may be placed at varying positions and/or locations and/or orientations throughout inference and/or throughout training a ML model as described herein.

The use of more than one antenna per transmitter additionally allows the independent measurement of azimuth and/or elevation angles. This allows extending positioning to three dimensions and allowing additional orientation calculations. Herein, orientation may also be referred to as pose of the autonomous robotic platform.

Diagnostic data such as amplitude strengths may be used, which can be beneficial in correcting and estimating the expected measurement uncertainty of a UWB distance measurement. Thus, conditional normal distributions can be modeled for the individual UWB measurements, which can ultimately be used to calculate a final position and/or pose. For this purpose, an algorithm based on maximum (log) likelihood estimation can be used, which particularly minimizes the negative sum of the logarithms of the probabilities assigned to the individual measurements, particularly taking into account the specific estimated parameters of the measurements, the computed position and/or the computed pose. This positioning procedure, particularly formulated as a non-linear optimization problem, can be applied to any number of UWB measurement instruments. Quasi-Newtonian methods such as the Boyden-Fletcher-Shannon-Goldfarb algorithm can be suitable for solving the minimization problem. Such algorithms particularly approximate the inverse of the Hessian matrix at each iteration step, which in turn can be used to quantify the uncertainty of the estimator in the vicinity of the final converged position.

The term "computer-implemented position prediction method" particularly refers to a method that can be carried out using a computer system, including but not limited to a desktop computer, laptop computer, tablet computer, or mobile device. The method may be implemented using software code running on the computer system, or it may be implemented as a cloud-based service accessed over a network connection. The respective method may be implemented in a system that can comprise at least one of a data storage unit, particularly as described elsewhere herein, a data processing apparatus, particularly as described elsewhere herein, an autonomous robotic platform such as a robotic mower, robotic vacuum cleaner, cleaning robot, tray transport system, particularly as described elsewhere herein, and/or a cloud service device, particularly comprising at least one server. In other words - particularly more general terms - the method may be implemented based on machine-readable instructions that can be read by a machine such as a computer, CPU or any other device capable to read electronic instructions, particularly from a storage device for temporal or permanent storage, such as magnetic drives, magnetic bands, electronic circuits, flash drives, CPUs, GPUs, SSDs or HHDs to name a selection of possible options.

The term "UWB" particularly refers to ultra wide band technology, which is a type of wireless communication that can use a wide frequency range to transmit data. In this context, UWB technology can be used to measure the distance and/or pose between an autonomous robotic platform and one or more UWB beacons.

The term "autonomous robotic platform" particularly refers to any type of robot or device that is capable of moving and performing tasks independently, particularly without direct human intervention. This includes but is not limited to robots used for cleaning, maintenance, inspection, or other applications, particularly as also described and/or listed elsewhere herein.

The term "UWB beacon" particularly refers to a device that can emit UWB signals to enable distance measurements between the beacon and other devices or objects. In this context, the UWB beacons can be used as reference points for determining the position and/or pose of an autonomous robotic platform.

Anchors (respective tags) can be used in the described method as UWB beacons. The ML model can be trained using anchors to provide positioning information.

Anchors and/or tags may comprise sender / emitter systems for UWB signaling e.g., with respect to the autonomous robotic platform, but also with respect to each other.

Assigning at least one quality indicator may refer to the process of assigning a measure of confidence or reliability to the UWB-measured distance data, indicating the quality of a certain predicted distance and/or pose.

The step of providing to the ML model UWB-measured distance data particularly indicates that distances between the autonomous robotic platform and at least a first UWB beacon and a second UWB beacon are processed, transferred, calculated, taken into account or are handled in any way suitable for the method, device and/or system to fulfill the respective purpose described elsewhere herein. These distances can function as a local coordinate system, which can be a coordinate system that is local to the environment in which the autonomous robotic platform can be operating. In other words, the local coordinate system can implement the respective operational space into a machine and map the real surrounding into a digital environment for handling the respective method(s).

The step of providing UWB-measured distance data particularly indicates that the distances between the autonomous robotic platform and at least two UWB beacons can be used as input parameters for the ML model, which may use them to make predictions about the position (and/or pose) of the autonomous robotic platform in its local environment. The UWB beacons are particularly placed in (known for training) positions relative to each other and the autonomous robotic platform, allowing the machine-learning model to use the distances as a local coordinate system for positioning purposes. This local coordinate system allows the ML model to make predictions about the position of the autonomous robotic platform without relying on global coordinates, which can be affected by factors such as GPS signal interference or multipath propagation. By using a local coordinate system based on the UWB distance measurements, the ML model can be able to accurately depict its uncertainty when making predictions for the position of the autonomous robotic platform in its operation environment. During training of the ML model, as described elsewhere herein, the respective local coordinate system can be taught to the device and/or system such that irrespective of the placement of the beacons during inference of the method, a position (and/or pose) of the autonomous robotic platform can be predicted with the respective quality indicator. Alternatively or additionally, the respective position (and/or pose) of the autonomous robotic platform can be corrected such that a most likely position (and/or pose) can also be set for controlling the autonomous robotic platform, particularly in it's movements during inference of any of the respective methods.

The step of providing to the machine-learning model UWB-measured pose data particularly refers to providing information about the (position and/or) orientation of the autonomous robotic platform relative to at least a first UWB beacon and/or a second UWB beacon. In order to provide UWB-measured pose data to the ML model, information about the (position and/or) orientation of the autonomous robotic platform relative to at least one UWB beacon can be measured. UWB may be implemented such that it allows measurements of angled orientation as described elsewhere herein. Alternatively or additionally, pose data can be measured by using additional sensors, such as inertial measurement units (IMUs) or magnetometers, that are capable of measuring changes in the robot's orientation and angled position over time.

The pose data can (then) be combined with the UWB-measured distance data to provide a more complete picture of the robot's position, location and/or orientation within its environment. This information can be used by the ML model to improve the accuracy of its predictions, particularly in situations where the robot is operating in a dynamic or changing environment e.g., a construction site. It further allows to implement a three-dimensional real space to three-dimensional local coordinate system and not to project and/or map the three-dimensional real space onto a two-dimensional local coordinate system, what necessarily results in data loss and "collection" of inaccuracies. Furthermore, the respective three-dimensional local coordinate system in the digital allows to hold information about orientation and pose to determine also a topological map of the operational space, such as hilly terrain. This allows to implement a respective energy optimization for operation as it may allow to calculate a respective energy efficient route. Providing UWB-measured pose data to the ML model allows improving the accuracy and reliability of the positioning system for autonomous robotic platforms, particularly in situations where precise knowledge of the robot's orientation and/or position is/are critical.

Correcting the UWB-measured distance data and/or pose data particularly refers to adjusting or refining the raw measurements obtained from the UWB sensors in order to improve their accuracy or reliability. Correcting the UWB-measured distance data and/or pose data particularly involves improving the accuracy of the raw measurements obtained from the UWB sensors by adjusting or refining them. This can be done through various techniques, such as filtering, smoothing, or fusing with other sensor data. The technical implementation of correcting the UWB-measured data may involve using algorithms and implementing at least one mathematical model into a machine to estimate and remove errors/inaccuracies in the raw measurements caused by factors such as noise, interference, or multipath propagation. This can be done in real-time or offline, depending on the system design and requirements. The corrected distance and/or pose data may be used as input for the ML model as it is described herein to improve its accuracy in predicting the position and/or pose of the autonomous robotic platform.

Transforming the UWB-measured distance data into distance distributions particularly comprises assigning the at least one quality indicator of the UWB-measured distance data to the distance data, which allows for the representation of uncertainty and/or confidence in the measurements. Transforming the UWB-measured distance data into distance distributions particularly refers to the process of using the quality indicators assigned to the raw distance measurements to create a set of distance values with associated probabilities or confidence levels. This can be done by convolving the raw distance measurements with probability density functions (PDFs) that reflect the uncertainty or confidence in the measurements. The resulting distribution may represent the possible values that the true distance between the autonomous robotic platform and the UWB beacons could take, along with their associated likelihoods. This transformation allows for a more complete representation of the information contained in the raw measurements, which can be useful for tasks such as position and/or pose estimation or sensor data fusion.

In particular embodiments the form of the PDFs that will be used to represent the uncertainty in the measurements can be defined and/or provided. These PDFs can capture the (expected) distribution of the true distances based on the available information about the system and the measurement process. They can be defined using statistical models, such as Gaussian distributions, or based on expert knowledge of the system and its limitations. Furthermore, they can be based on real measurements when assembling training data sets to train the ML model. Once the PDFs have been defined, they can be convolved with the raw distance measurements to create the distance distributions. This is particularly done using numerical methods, such as the Fast Fourier Transform (FFT), which allows for efficient computation of the convolution. The resulting distance distributions can then be used as input to the ML model for position estimation or sensor data fusion, but further particularly for training the ML model as described elsewhere herein.

Alternatively or additionally to convolving the raw distance measurements with PDFs, other transformations on the data can be performed, such as normalization or scaling, in order to ensure that the resulting distributions have the desired properties and are suitable for use in the ML model. Overall, the process of transforming the UWB-measured distance data into distance distributions allows for a more complete representation of the information contained in the raw measurements and can lead to improved accuracy and robustness in the final position estimates.

Transforming the UWB-measured pose data into pose distributions particularly comprises processes corresponding to those laid out above, where the quality indicators can be assigned to the pose data to represent uncertainty or confidence in the measured (position and) orientation. To transform the UWB-measured pose data into pose distributions, similar/respective steps to that of transforming the distance data into distance distributions can be applied. This particularly comprises assigning a quality indicator or confidence level to each measurement in the pose data set. The quality indicators can be based on various factors such as the reliability of the measurements, the stability of the UWB beacon positions and/or orientations, and the accuracy of the sensor readings.

Once the quality indicators have been assigned, a probability density function (PDF) can be created for each pose measurement that reflects the uncertainty associated with the measurement. The PDFs can be based on various statistical models such as Gaussian distributions or can be estimated from the data using ML techniques. The PDFs can (then) be combined with the corresponding measurements to create a pose distribution for each measurement. These distributions particularly represent the possible poses of the autonomous robotic platform in the local coordinate system, taking into account the uncertainties associated with the measurements.

The described method steps can be carried out using various techniques such as Bayesian estimation or Monte Carlo simulation. The quality indicators and PDFs can be calculated based on the available information about the environment, the UWB beacon positions, the UWB beacon orientation and/or the sensor readings. The resulting pose distributions can (then) be used to train the ML model or to make predictions about the position and/or orientation (pose) of the autonomous robotic platform in the local coordinate system.

Determining the most-likely position and/or most-likely pose of the autonomous robotic platform in the local coordinate system by optimizing a cost function particularly refers to using mathematical techniques to find the best possible solution for the position and/or orientation (pose) of the autonomous robotic platform, based on the measurements obtained from the UWB sensors, particularly placed at the anchors and/or tags. The optimization process may involve minimizing or maximizing a cost function, which can be a measure of how well the proposed solution fits the available data.

In further detail, the optimization process for determining the most-likely position and/or pose of the autonomous robotic platform in the local coordinate system particularly comprises defining the cost function, which quantifies the difference between the predicted and measured distance or pose data. The cost function can (then) be minimized using various mathematical techniques such as gradient descent or Newton's method to find the solution that best fits the available data. The optimization process may be performed iteratively, with the ML model updating its predictions based on the optimized position and/or pose and the updated measurements used to refine the position and/or pose estimates in subsequent iterations.

The implementation of this step can compromise various technical considerations such as selecting appropriate optimization algorithms and tuning their parameters to balance speed and accuracy, handling outliers or noisy data, and/or enabling that the solution is within reasonable bounds (e.g., preventing the robot from occupying invalid positions and/or poses). The optimization process may also be parallelized or distributed across multiple computing nodes to improve efficiency.

The step of evaluating UWB distance measurements using a neural network performing regression to fit a probability distribution particularly comprises estimating random variables for localizing the tag/beacon/anchor by using combinations of n >= 2 tags/beacons/anchors and measurements. For a normal distribution, an inner ring can represent the mean of the estimated distribution, and the width of outer bands may correspond to an expected standard deviation of the distance measurement. The final position estimate can be determined as the point with the highest cumulative log probability. This may result in a Probability Density Function for the estimated tag/beacon/anchor position.

In this step, an ML model, for example an artificial neural network, particularly uses regression analysis to fit a probability distribution to the UWB distance measurements. The goal is to estimate random variables that can be used to localize the tag, using combinations of at least two anchors and their associated measurements. If the resulting distribution is assumed to be normal, the mean of the estimated distribution represents the inner ring, while the width of the outer bands corresponds to the expected standard deviation of the distance measurement. The final position estimate can be determined as the point with the highest cumulative log probability, resulting in a Probability Density Function that describes the likelihood of different positions for the tag/beacon/anchor. This approach allows for the incorporation of uncertainties and errors in the measurements, providing a more robust estimation of the tag's/beacon's/anchor's position. To get the final Probability Density Function for the estimated tag's/beacon's/anchor's position each of the estimates described above can be combined.

According to an aspect optimizing the cost function can comprise minimizing a negative sum of a log likelihood. This improves predicting the position of the autonomous robotic platform by optimizing the cost function, which allows for more accurate predictions and better performance, particularly in challenging environments where there may be interference, multipath trajectories, passing of trajectories through objects and/or noise in the UWB measurements. The use of a negative sum of log likelihood as the cost function provides a robust optimization method that can handle noisy data and outliers, resulting in improved position prediction accuracy.

In this context, "optimizing the cost function" particularly refers to finding the values of the parameters of the ML model that minimize the "negative sum of log likelihood", particularly referring to a cost function comprising the sum of negative log likelihoods for each of the predicted distances between the autonomous robotic platform and the UWB beacons. The log likelihood can be a measure of how likely a given set of predicted positions is, based on the observed data. By minimizing the negative sum of log likelihoods, the position prediction method can find the most probable position that best fits the observed data. In further detail, the cost function may represent the dissimilarity between the predicted distances and the true distances. The log likelihood is used to measure how well the model fits the observed data. The likelihood function can measure the probability of observing the training data given the ML model parameters. By taking the negative logarithm of the likelihood function, the multiplication of probabilities can be converted into an addition of logarithms, which makes it easier to optimize using gradient descent for example. By taking the negative of this value, it becomes a measure of how poorly the model fits the data. The negative log likelihood may provide a measure on how closely a respective ML model prediction aligns with the ground truth labels. It can be calculated as -log(y^), where y^ is particularly the prediction corresponding to the true class label after the ML model outputs are converted into probabilities. In the case of the negative log-likelihood for a Gaussian random variable, the negative allows a behavior corresponding to a distance interpretation wherein the function can be evaluated at a particular yi that is highly probable given µ(xi) and σ(xi), i.e. when µ(xi) is reasonably close to yi and σ(xi) is sufficiently small, wherein smaller is "better" as in "closer".

Implementation-wise, the (negative) log likelihood can be estimated by comparing the predicted distances to a set of ground truth distances obtained through other means such as RTK GPS measurements. The negative sum of these log likelihoods can then be used as the cost function in the optimization process. This process can be repeated multiple times with different initializations and/or varying degrees of regularization to find the optimal values for the parameters of the ML model that may minimize the cost function.

According to an aspect the at least one quality indicator can be a standard deviation assigned to the corrected UWB-measured distance data and/or pose data. This provides a way to quantify the uncertainty or confidence in the predicted positions and/or poses by assigning a standard deviation to the corrected UWB-measured distance and pose data. This information can be used to evaluate the performance of the position prediction method, as well as to make more informed decisions about how to use the predicted positions in downstream applications.

In this context, "at least one quality indicator" particularly refers to a numerical value that provides information about the reliability or uncertainty of the predicted positions. The quality indicator can take different forms, such as a standard deviation, a confidence interval, or a probability distribution. The quality indicator can provide an estimate of the accuracy of the predicted positions, allowing the autonomous robotic platform to make more informed decisions based on the level of uncertainty in the measurements.

A "standard deviation" can be a measure of the spread or variability of a set of data points around their mean. In further detail, the standard deviation can be a value that represents the typical amount of variation or dispersion in a set of data points. It can be calculated by taking the square root of the variance, which is the average of the squared differences from the mean. The higher the standard deviation, the more spread out the data points are, and the greater the uncertainty in the measurements. It can be a quantitative way to describe the amount of uncertainty or dispersion in a dataset. In terms of implementation, the quality indicator can be calculated using statistical methods such as Bayesian inference or by incorporating noise models into the ML model. The specific method used for calculating the quality indicators will depend on the requirements of the application and the availability of information about the system noise and measurement errors. Once calculated, the quality indicators can be included in the distance distributions and pose distributions, allowing for a more complete representation of the uncertainty in the predicted positions.

The term "UWB-measured distance data" particularly refers to the raw measurements obtained from the UWB sensors on the autonomous robotic platform, indicating the distances between the platform and the UWB beacons. The UWB-measured distance data refers to the raw measurements obtained from the ultra-wideband (UWB) sensors on the autonomous robotic platform. These measurements indicate the distances between the platform and the UWB beacons, which are used as a local coordinate system for positioning purposes. The quality indicators assigned to the UWB-measured distance data can take the form of standard deviations or other measures of uncertainty or reliability in the measurements.

The term "(UWB-measured) pose data" particularly refers to information about the (position and/or) orientation (the pose) of the autonomous robotic platform relative to the UWB beacons or other reference points in its environment. Pose data can include both distance measurements, such as lateral and vertical distances, and angle measurements, such as azimuth and elevation angles. Furthermore, it may comprise solely angle measurements, such as azimuth and elevation angles. The quality indicators assigned to the pose data can also take the form of standard deviations or other measures of uncertainty or reliability in the measurements.

The implementation of these processes particularly comprises using mathematical techniques to analyze and interpret the raw measurement data obtained from the UWB sensors on the autonomous robotic platform. This may comprise using statistical methods to calculate measures of variability, such as standard deviations, or other measures of uncertainty, as well as using ML algorithms to refine or correct the measurements. The specific implementation details can depend on the particular system and application being used, as well as the requirements and constraints of the environment in which the autonomous robotic platform is operating. Thus, the respective method can be transferred and/or applied to a whole bunch of settings and use cases as mentioned elsewhere herein.

According to an aspect the ML model may comprise a neural network. Therein, a first output neuron may comprise an estimate for the residual of the UWB-measured distance data for correcting the UWB-measured distance data. Alternatively or additionally the neural network may comprise a first output neuron comprising an estimate for the residual of the UWB-measured pose data for correcting the UWB-measured pose data.

In this context, "machine learning" (short: ML) particularly refers to a field of artificial intelligence (AI) that may comprise training algorithms to learn patterns in data and make predictions based on that learning. ML models can be used for a wide range of tasks, including classification, regression, clustering, and more.

Artificial Neural Networks (short: ANN) are ML models particularly inspired by the structure and function of the human brain. ANNs comprise layers of interconnected artificial neurons that process input data and produce output predictions. They are particularly well-suited to tasks where the relationship between inputs and outputs is complex or nonlinear. Therefore, they can be powerful algorithms that can learn - by training them - complex patterns in data, making them particularly well-suited to handle the noise and variability in the UWB measurements. By using a first output neuron to estimate the residual of the UWB-measured distance and/or pose data, the ANN can provide more accurate corrections to the raw measurements, particularly resulting in improved position and/or pose prediction accuracy.

In embodiments, the ML model can be executed on the autonomous robotic platform, for example a mower, itself. In this context, "running on the autonomous robotic platform" particularly refers to the ML model and respective algorithms and ANNs can be executed or processed by the autonomous robotic platform itself, specifically by the mower component controlling the operation or parts thereof of the mower.

In embodiments, the ML model can run on a cloud-based server or server network. Therefore, real-time evaluation may comprise constant access to the cloud. Alternatively or additionally, a base station can be provided running the ML model. Running the ML model on the base station and/or the mower may reduce latency and other issues for real-time evaluation of the positioning data.

In embodiments, wherein the ML model is running on a cloud-based server or base station, a reliable and fast connection between the autonomous robotic platform- e.g., the mower - and the base station can be provided. In this approach the autonomous robotic platform can send the raw UWB-measured distance and/or pose data to the base station for processing, and may then receive the corrected data back from the base station or cloud-based server.

The choice of whether to run the ML models on the autonomous robotic platform, the base-station, on a separate server or a distributed approach between several of these devices and/or systems can depend on various factors such as the specific requirements of the application, the available computing resources, and the desired level of real-time performance. In either case, computational resources required for running the models and the potential impact on battery life for portable devices like autonomous robotic platforms can be taken into account.

An "estimate for the residual" particularly refers to a prediction of the difference between the corrected distance and/or pose data and the raw UWB-measured distance and/or pose data. The estimate for the residual can be used as input to the ML model, along with the raw measurements, in order (to learn how) to correct the UWB-measured data more accurately.

A "first output neuron" particularly refers to a first type of artificial neuron in an ANN in the output layer. The first neuron can be connected to other neurons in the ANN receiving input from other neurons to output an estimate for the residual of the UWB-measured pose data for correcting the UWB-measured pose data and/or to output an estimate for the residual of the UWB-measured distance data for correcting the UWB-measured distance data. The term "first", "second", "third", etc. is for distinguishing the respective neurons from each other but do not necessarily represent a hierarchy or listing according to importance of the respective neuron or type of neuron with respect to other neurons or types of neurons. Therefore, the respective term does also not necessarily indicate a respective ordering of these neurons or type of neurons in any of temporally, logically, computationally or any other list of potential connection and/or relation therebetween.

According to an aspect the ML model can comprise an artificial neural network (ANN), wherein a second output neuron provides a standard deviation estimate of the estimated residual (and therefore also for the estimated distance and/or for the estimated pose). By providing a second output neuron to estimate the standard deviation of the residual, the ANN can provide more accurate estimates of the uncertainty in the predicted distances and poses. This allows for improved decision making and better performance in downstream applications.

In this context, "second output neuron" particularly refers to a second type of artificial neuron in an ANN that can provide an estimate as quality indicator of the standard deviation of the residual. This output neuron can be connected to other neurons in the network and it may receive input from those other neurons to output a measure of uncertainty in the predicted distance and/or pose in form of the standard deviation estimate of the estimated residual.

A "standard deviation estimate of the estimated residual" particularly refers to the standard deviation, particularly as defined elsewhere herein, with respect to a prediction of the difference between the corrected distance data and/or pose data and the raw UWB-measured distance data and/or pose data, particularly after the correction has been applied using the ML model. Therein a prediction of the difference between the corrected distance data and/or pose data and the raw UWB-measured distance data and/or pose data are the respective estimated residual, providing an estimate of how much the corrected distance differs from the original measured distance.

UWB sensors can measure distance. To do so, two fixed positions may be arranged on a basis e.g. a charger base station. Beacons may not be fixed, but can be placed around the area of operation and/or within the area of operation. Calculation of the position of an autonomous robotic platform, for example a mower, can be performed. It may not use the raw distance measurement, but can use the ML model for the measurement and give the respective standard deviation. Training of the ML model can be performed on the ranging information and signal reception quality for example. In a minimization step (also to be referred to as an optimization step) a real time minimization (step) can be performed. The data from the measurements can be corrected and predictions for respective distributions can be made. From there, working with distribution is possible, e.g. using the Goldberg et al. algorithm for solving the minimization problem to find the best distribution maximum and/or minimum likelihood distribution with certain final uncertainty UWB estimate to refine. As laid out elsewhere herein, a Kalman filter algorithm for fusing sensor measurements and sensor noise can be provided with sensor noise. Sensor noise can be represented as a covariance matrix, a process noise covariance matrix. A process noise covariance matrix may provide a solution where it adapts to the observed residuals.

In an embodiment, three anchors and three distances may be provided. The three distance distributions particularly resulting from the anchor position known (for the example) may find X- and Y-coordinates in the two-dimensional plane. A metric can be provided to reach the respective coordinates: the sum of negative log likelihood allows calculating a distance from each of the anchors and the distance has to match the obtained distance in the negative log likelihood. Therefore, the latter may also be called a loss function (e.g. a mean distributed 0.4 likelihood has a standard dev. 1 decreasing to lower values, if the match is getting worse). As the values can become quite small log is used. Therefore, a 100 % of the respective position and/or pose data provided to the ML model can be known. A bayesian ML model is one way to get uncertainty quantification.

In embodiments, an ensemble of neural networks can be possible. More than one output layer can be provided. Weights might not be values, but Bayesian distributions. This allows to compensate for the potential result in the behavior that one does not get the same output every time the method is run e.g., in a consecutive manner of either training, inference or a combination thereof, otherwise. One might not end up with the same sets of weights, even as also the ensemble of Bayesian neural networks would not necessarily be redundant and/or might not be performed to provide an alternative. The input into an input layer of the ANN can be ranging information together with diagnostics information (the respective mode may be called). For each of the distance estimates three (for the respective example of three anchors/beacons/tags being used; with more anchors and/or tags and/or beacons more exist accordingly) additional meta data exist, comprising amplitudes signal strength which may be used to identify line of sight conditions and/or no-line of sight condition with the latter particularly having higher uncertainty. The output can be a mean of a distribution and a standard deviation estimate independent of type of network for specifying the distribution. As mentioned elsewhere herein the ANN can be Bayesian or also an ensemble of independent ANNs, particularly (all) without convolutional layer(s). The estimate of the remaining uncertainty can be accounted for.

The UWB sensor(s) particularly measure(s) distance(s), based on particularly two fixed positions such as a charger base station, and potentially other beacons placed around or within the operating area. To calculate the autonomous robotic platform's, particularly the mower's, position, the raw distance measurement may not be used but instead, the ML model can be employed to provide standard deviation after being trained on ranging information and signal reception quality. The minimization step particularly comprises real-time optimization, while measurements can be corrected and predictions can be made for distributions using Goldberg et al.'s algorithm, which may find the best maximum likelihood distribution with a certain level of uncertainty for refining the UWB estimate.

According to an aspect, a covariance matrix can be calculated to provide an uncertainty of the prediction of the estimator. This allows training the ML model by using a small amount of measurement data as input. This allows for more efficient and cost-effective training as well as inference, since it requires less data than traditional methods that rely on extensive ground truth measurements or other types of high-precision distance measurements. Additionally, this approach can be applied in environments where there is limited access to accurate distance measurements or where it is difficult to obtain precise ground truth data. Furthermore, it allows to "factor in" non-line of sight conditions as well as multi path conditions.

In this context, "covariance matrix" particularly refers to a square matrix that can describe the covariance between different variables in a set of data. The covariance matrix can be used to quantify the uncertainty or variability in the measurement data and provide an estimate of the error in the predicted distance values.

A covariance matrix can be used to represent sensor noise in the Kalman filter algorithm, which particularly fuses sensor measurements. The process noise covariance matrix particularly adapts to observed residuals. Three (or respectively more, but at least two) anchors can provide three distance distributions from known anchor (may apply to beacons and tags accordingly, particularly throughout the description elsewhere herein as well) positions, allowing X-, Y- and/or Z-coordinates to be found using a metric. The sum of negative log likelihood can calculate distances from each anchor, with the obtained distance matching the negative log likelihood's value, which can be called a loss function. Bayesian uncertainty quantification can be one way to obtaining it. In an embodiment, an ensemble of neural networks is possible, where weights are represented as Bayesian distributions and different output sets are generated, although reducing redundancy with an ensemble of Bayesian neural networks may not always be used. Multiple input layers can be used for input ranging information and diagnostics, with distance estimates accompanied by, particularly three, additional metadata amplitudes for signal strength to identify line-of-sight or no-line-of-sight conditions. The output can be the mean of a distribution with a standard deviation estimate independent of network type. Anchor positions can be found by taking distributions from the anchors themselves, allowing estimation of remaining uncertainty in tag positioning. Thus, one does not have to know the anchor's coordinates upfront.

Likelihood-based UWB positioning particularly involves an optimization procedure that takes into account the coordinates of anchors and distance measurements, both being subject to uncertainty, which can have similarities to positioning using MSE (mean squared error). Different from the latter, the method can account for anomalies in measurement data and can provide the best possible positioning with correct uncertainty estimation of measured values, so far. This can be achieved by minimizing the negative log likelihood of all available measurements (joint maximum likelihood) and determining the variance of the estimator through the inverse of the Hessian matrix of the optimization function, allowing for the calculation of the covariance matrix of the most probable UWB position given. The covariance matrix of the position particularly depends on factors such as anchor and tag constellation as well as measurement reliability.

An "estimator" is a particular mathematical model or algorithm that can be designed to make predictions based on input data, particularly providing a respective estimate of the prediction quality as described elsewhere herein. In this context, the estimator particularly is provided by the ML model used to correct the UWB-measured distance data and to predict the most likely position of the autonomous robotic platform in the local coordinate system.

The measurement data between transceivers may include a variety of information related to the UWB measurements, such as raw distance estimates via Time of Flight (ToF) or other distance and ranging information, data from Channel Impulse Response (CIR), temperature of the transceivers, and other relevant parameters that can affect the accuracy of the UWB measurements. This data can be used to train the ML model as described elsewhere herein and to improve the ML model's ability to correct the UWB-measured distance data and to predict the most likely position of the autonomous robotic platform.

To further elaborate, the estimator can be a key component of the UWB positioning system that uses an ML model to analyze the input data from the transceivers and make predictions about the position of the autonomous robotic platform in the local coordinate system. The ML model can be trained on a dataset that includes the raw distance estimates obtained through Time of Flight (ToF) measurements and/or other ranging and/or distance measurement method, as well as other relevant parameters such as Channel Impulse Response (CIR), temperature of the transceivers, and potentially (selected) any other information that may affect the accuracy of the UWB measurements.

The training process particularly comprises feeding the ML model with a large number of input-output pairs, where the outputs can be the corrected distance data and the predicted position of the autonomous robotic platform obtained through ground truth by other reliable methods. The model can thus learn the relationship between the input parameters and the desired output, so that it can make accurate predictions even when given new, unseen data.

Once trained, the ML model can provide a powerful estimator that can be used to correct the UWB-measured distance data and predict the most likely position of the autonomous robotic platform with high accuracy, particularly also providing an estimate of the respective prediction quality. This allows for a more precise control and navigation of the robotic platform in various operating environments.

Method steps that may be implemented additionally and/or alternatively may comprise the steps of preprocessing the input data, training the model on a large dataset, and/or deploying it on the autonomous robotic platform to make real-time predictions based on measured distance data, particularly in real time. Regular monitoring and updating (on-going training by inference) of the model may also be implemented to allow optimal / improving performance over time.

According to an aspect the covariance matrix can be estimated based on the inverse of the Hessian matrix at a convergence point of the cost function. The Hessian matrix is particularly a square matrix that describes the second derivatives of the cost function with respect to the model parameters, and its inverse can be used to estimate the covariance matrix of the predictions made by the ML model. This approach allows for more accurate estimation of the uncertainty in the predicted distance values and can improve the performance of the position prediction method.

The term "cost function" particularly refers to a mathematical function that can be used to evaluate the performance of the position prediction method. The cost function can be designed to minimize the difference between the predicted distance values and the (assessed) true measured distance values, providing a measure of how well the machine-learning model fits the available data. This may apply to pose data as well. Reducing the "costs" of a fit may allow to bring the respective fitted function closer to the data points of real, measured values. In (other) ML terms, the cost function can be used to estimate how badly the underlying ML model is performing. Put simply, a cost function can be a measure of how wrong the model is in terms of its ability to estimate the relationship between a given X and estimated Y for example. This is particularly expressed as a difference or distance (here not necessarily the real physical distance, for example when referring to pose data, but may overlap in distance measurements) between the predicted value and the actual value.

In this context, "convergence point" particularly refers to a point where the cost function has reached a minimum value, indicating that the ML model has found an optimal solution for the given set of parameters. At this point, the Hessian matrix is well-defined and can be used to estimate the uncertainty in the predicted distance values.

In this context, the inverse of the Hessian matrix at a convergence point of the cost function particularly refers to the matrix that is obtained by inverting the Hessian matrix at the convergence point of the cost function. This matrix can be used as an estimate of the covariance matrix for the predictions made by the ML model, providing a measure of the uncertainty or variability in the predicted distance values.

To further elaborate on this, the term "convergence point" particularly refers to a state where the cost function has reached its minimum (optimal) value. This occurs when the parameters of the machine-learning model have been optimized to provide the best possible fit with the available data. At this point, the Hessian matrix can be well defined and can be used to calculate the uncertainty in the predicted distance values.

The Hessian matrix can be a square matrix that represents the second derivative of the cost function with respect to the parameters of the model. It provides information about the curvature of the cost function, which is important for determining the stability of the minimum point.

According to an aspect the position data can be processed in a Kalman filter. Alternatively or additionally, the pose data can be processed in a Kalman filter. The Kalman filter is a particular approach that can combine information from multiple sources to produce more accurate estimates of the position and/or pose of the autonomous robotic platform. By using a Kalman filter in conjunction with the ML model, the position prediction method can take into account both the UWB-measured distance data, and/or pose data, and any other available information, such as motion sensor readings or GPS data, to produce more accurate predictions of the position and velocity of the autonomous robotic platform.

UWB distance and/or pose measurements can be evaluated by a neural network performing regression to fit a probability distribution for a given measurement. In this context, a "Kalman filter" particularly refers to a mathematical algorithm that can be used to estimate the state of a system based on noisy observations and measurements. The Kalman filter can be a recursive algorithm that can use a Bayesian estimation technique to combine information from multiple sources in order to produce more accurate estimates of the position and/or pose of the autonomous robotic platform.

The position of the tag on the autonomous robotic olatform (may apply to beacons and/or anchors respectively) can be estimated by combining measurements from at least two anchors using estimated random variables. In the case of a normal distribution, an inner ring may represent the mean and the width of outer bands - with respect to the inner ring lying in-between the outer bands - may correspond to the expected standard deviation of the distance measurement. The point with the highest cumulative log probability can be chosen as the position estimate. This process can be repeated to obtain a final Probability Density Function for the estimated tag position. The uncertainty in the final position estimate may not be evenly distributed in the X- and Y-dimension (also for the respective Z-direction, the rings may correspond to spheres in respective embodiments) and may exhibit covariance, which can affect path planning and performance.

In embodiments, the final tag position may not be evenly distributed in the Y and X axis and may exhibit covariance. This allows to further optimize the path planning and potentially increase the performance of our adaptive unscented Kalman filter. It should also be noted that the Kalman filter essentially also works by propagating PDFs of the different random variables to find the most probable position.

The Kalman filter particularly uses predicted distributions of random variables to find the most probable position and may account for any additional information about the position and motion of the autonomous robotic platform. Bayesian neural networks or an ensemble of regular neural networks can also be used for more robust uncertainty quantification, but the latter may require separate training.

By processing the position data in a Kalman filter, the ML model can take into account any other available information about the position and/or pose of the autonomous robotic platform, such as readings from motion sensors or GPS data. This allows for more accurate predictions of the position and/or pose of the autonomous robotic platform and can improve the performance of the position prediction method in real-world applications.

In other words, Bayesian Neural Networks may be used for more robust uncertainty quantification. Weights can be modelled as learned distributions instead of learned point estimates, therefore making the output of the model non deterministic. Multiple passes with the same input may yield different results. The divergence of the results (in the embodiments described herein, the predicted distributions) may indicate epistemic uncertainty. The dimensional regression in x-dimension to model y-dimension may result in the model being more different when having observed less. The model may be extended to multidimensional space, partucularly the three dimensional euclidic space, alternatively or additionally also the spherical space for pose information. Epistemic uncertainty can be lower with more input samples from the training data sets than in areas of training with less input samples from the training data sets. The ML model of interest can be implemented to predict the behavior in areas - parts of the data space, not necessarily the physical area of operational space - that were not covered by the training data sets provided during training.

As described elsewhere herein, weights can be modeled as learned distributions instead of learned point estimates, therefore making the output of the model non deterministic. Multiple passes with same input may yield different results. The divergence of results (in the respective embodiments corresponding to predicted distributions) may indicate epistemic uncertainty. Fitting functions from same number of forward passes can be closer together when more training samples have been used, therefore less epistemic uncertainty being present.

According to an aspect the UWB-measured data can be at least partially based on one of the following UWB-topology signals: Two Way Ranging; Time Difference of Arrival; Reverse Time Difference of Arrival; or Phase Difference of Arrival. The respective technical implementations may provide signals which can provide more accurate measurements of the distance and/or pose than traditional methods particularly than those that rely solely on time-of-flight measurements. They may take into account the round-trip time of the signal and can correct for any delays or distortions caused by obstacles in the environment. Additionally, these UWB-topology signals can provide more reliable measurements in challenging environments where there may be multipath propagation, reflections, or other sources of interference that can affect the accuracy of the measurements.

In this context, "Two Way Ranging" (TWR) particularly refers to a method for measuring distance between two devices using UWB technology. In Two Way Ranging, both devices transmit and receive signals simultaneously, allowing for more accurate measurements by taking into account the time it takes for the signal to travel between the devices. By taking into account the round-trip time of the signal, Two Way Ranging can provide more accurate distance measurements compared to one-way ranging methods that only measure the time it takes for the signal to travel in one direction. TWR may calculate the distance between a tag and an anchor by determining the time it takes for UWB radio frequency (RF) signals to pass back and forth between them (ToF) and then multiplying that time by the speed of light.

In practical implementation, TWR can be achieved by configuring UWB devices - respective the system - to transmit and receive signals simultaneously using specialized protocols such as Time Difference of Arrival (TDOA) or Reverse Time Difference of Arrival (RTDOA). The device's firmware particularly comprises a distance measurement algorithm that can calculate the distance based on the measured round-trip time of the signal, considering factors such as propagation delay, noise, and multipath effects.

A tag can initiate TWR by sending a poll message with a known address of an anchor, which may record the time it receives the message and may send a response. The tag can calculate the signal's Time of Flight (ToF) based on the signal's round-trip time (Tround) and the time it took for the anchor to process and reply to the initial poll message (Treply). The distance can then be calculated by multiplying the ToF by the speed of light. This calculated distance can be passed to the anchor in a final message.

With multiple anchors each with their own antenna, TWR can determine the absolute position of mobile devices and/or other tags. By determining the distance to three or more anchors in known locations, the device can estimate its location with great accuracy. The calculated distance(s) can then be communicated via UWB or other wireless technologies to a control unit for use as training data and/or inference of the respective method described elsewhere herein.

The "Time Difference of Arrival" (TDOA) particularly refers to a method for measuring distance based on the difference in time between when a signal is transmitted and received at two different locations. TDOA can be used to measure distances in environments where there may be multipath propagation or other sources of interference that can affect the accuracy of the measurements. TDOA can be used in UWB-based ranging systems because it can provide accurate measurements even in environments where there may be multiple paths for the signal, such as reflections off of walls or other objects.

TDOA is a technique for geo-locating RF sources. It particularly comprises three or more remote receivers (probes) capable of detecting the signal of interest. Each probe can be synchronized in time to capture corresponding input/output (I/Q) data blocks. Software may shift the time signature of each I/Q data set to find the difference in the arrival time at each probe. This gives the difference in the distance of the source from each set of probes. Using several probes provides a set of curved lines that indicate solutions t distance equations. The actual RF source can sit at the intersection of these lines.

To implement the TDOA method, multiple anchors can be placed in fixed and known locations - particularly at the base station useable for charging the autonomous robotic platform - and can be synchronized with respect to time. These anchors particularly receive signals transmitted by tags on the autonomous robotic platform, and can record the arrival time of these signals. The timestamps from multiple anchors can then be forwarded to a control unit, which may run the method as described throughout herein, which may comprise a multilateration algorithm to determine the autonomous robotic platform's location based on the differences in time of signal arrival at each anchor. This method is particularly highly scalable as it may require only one transmission from the tag and can therefore be energy efficient, particularly resulting in longer battery life for tags. The control unit particularly calculates the 2D or 3D position of the autonomous robotic platform using the TDOA data. TDOA may rely on the use of specialized hardware and software to accurately measure the time delay between transmission and reception of the signal at two different locations.

Precise timing information may have been provided, which can be obtained using high-performance clocks and low-latency data transfer protocols. The measured time delay can then be used to calculate the distance between the two devices (tags, beacons and/or anchors), taking into account factors such as the speed of light and any known delays introduced by other components in the system. TDOA can provide accurate measurements even when there are multiple paths for the signal, because the time delay between transmission and reception can be used to determine which path the signal took. This particular makes TDOA a useful technique in environments where other distance measurement techniques may be less reliable, such as indoor or urban settings with many reflective surfaces.

"Reverse Time Difference of Arrival" (RTDOA) particularly refers to a method for measuring distance based on the difference in time between when a signal is received and transmitted at two different locations. RTDOA can be used to measure distances in environments where there may be multipath propagation or other sources of interference that can affect the accuracy of the measurements. In further detail, RTDOA particularly refers to a method used for measuring distance by calculating the time difference between when a signal is received and transmitted at two different locations. Different from TDOA the anchors are sending the respective signals, not the tag. To implement RTDOA, the system can have knowledge of the exact time when the signal was transmitted by one device and received by another device. The difference in these times can (then) be used to calculate the distance between the two devices. The method may provide accurate timing information, which can be achieved using specialized hardware or software components that can be capable of generating precise timing signals. RTDOA is able to compensate for multipath propagation and other sources of interference. By measuring the time difference between when a signal is transmitted and received, RTDOA can accurately determine the distance between two devices even in environments where there may be multiple reflections or other sources of noise that could affect measurements.

In practice, RTDOA is often used in conjunction with other methods such as TWR or TDOA to improve the accuracy and reliability of distance measurements. By combining data from multiple sources, it is possible to obtain more accurate and reliable position estimates, even in challenging environments.

"Phase Difference of Arrival" (PDOA) refers to a method for measuring distance based on the phase difference between when a signal being transmitted and received at two different locations. PDOA can be used to measure distances in environments where there may be multipath propagation or other sources of interference that can affect the accuracy of the measurements.

PDOA is a technique for determining the relative positions of two devices particularly without requiring any additional infrastructure. It particularly utilizes a combination of distance and directional information, making it beneficial for peer-to-peer applications or reducing the amount of required infrastructure. In PDOA, one device e.g., the base station, can have at least two antennae to receive the signal from the other device e.g. the beacons and/or the autonomous robotic platform's tags. Using two antennae allows for determining additional angular information. When this device receives a signal from the other device, it can measure the difference in the phase of the arriving signal at each antenna. Based on this information, it can calculate the angle from which the incoming signal arrived. The receiving device now knows both the direction and the distance of the transmitting device by measuring the difference in phase of the incoming signal at each antenna. This allows for accurate position and/or pose estimation.

PDOA can be used in environments with multipath propagation or other sources of interference, and it particularly provides additional information for positioning in 3D space. In a simulation involving multi-antenna UWB systems, the sum of negative log likelihood can be minimized for each UWB anchor involved in positioning. This allows determining an area indicating the logarithmic likelihood sum for coordinates around the true tag position and their respective uncertainties. The effect of ignoring the Z coordinate can lead to poor positioning results, especially in hilly terrain. In PDOA at least one device may comprise at least two antennae that measure the phase difference of incoming signals to calculate the angle from which they arrived. By using two antennae, either azimuth or elevation angles relative to the receiver can be estimated. Knowledge of the elevation angle allows for improved positioning accuracy in environments with large differences in height. Alternatively or additionally, determining azimuth and elevation angle allow determining information about the relative pose of the autonomous robotic platform. Providing angular information, UWB distance measurements can be improved as parts of the Z component can be known. Using one or more of these UWB-topology signals may improve the accuracy and reliability of distance measurements between the autonomous robotic platform and the UWB beacons, enhancing the performance of position prediction methods in real-world applications.

Using PDOA in multi-antenna UWB systems may provide angular information, which may result in additional positioning robustness and possible extension of the system for positioning in 3D space and/or for providing pose information of the autonomous robotic platform. Based on the way the antennae are placed (side by side or above one another) either azimuth or elevation angle of the incoming signal relative to the receiver can be estimated. If the elevation angle is known, the component in Z direction of the distance measurement can be determined, which should allow for improved positioning accuracy, especially in environments with large differences in height.

Training data may also be provided based on simulated altitude, elevation and/or azimuth measurements particularly used together with simulated distance measurements. Alternatively or additionally real measurement data may be provided. Instead of minimizing the sum of the negative log likelihood for each distance distribution involved in the measurement, the sum of the sum of the negative log likelihood of each of the three measurement distributions (distance, azimuth, elevation) can be minimized for each UWB anchor involved in the positioning. Individual points may represent positioning results, for example using 1000 randomized sample measurements from three anchors. In a step of displaying respective simulation and/or determination information, coloring of an area in a respective plot may give indication of logarithmic likelihood sum for coordinates around a true tag position, resulting from the geometric placement of the three measurement anchors, as well as their respective uncertainties which can be equal in an embodiment. Thus, the Z coordinate might not be ignored completely anymore, which might lead to improved positioning results, particularly in hilly terrain.

According to an aspect diagnostic data can be provided to the method for correcting the UWB-measured distance data and/or for assigning the standard deviations to the corrected UWB-measured distance data. The respective method can also be applied - additionally or alternatively - for correcting UWB-measured pose data and/or or for assigning the standard deviations to the corrected UWB-measured pose data. Diagnostic data can provide information about the quality or reliability of the UWB measurements, such as the temperature or humidity of the environment, the condition of the transceivers, or other relevant factors that may affect the accuracy of the measurements. By incorporating this diagnostic data into the position prediction method, it is possible to improve the accuracy of the corrected distance values and reduce the uncertainty in the predictions.

Three antennae can be arranged in a specific embodiment to measure azimuth and elevation angles of incoming signals. While the ideal configuration allows for independent estimation of both angles, adding an additional antenna primarily for estimating the elevation angle can be most beneficial. This can be achieved with a configuration similar to the two-antenna setup "ANT2" and "ANT3", requiring only two antenna connections instead of three. Incorporating the elevation angle information from a multi-antenna UWB system into the Kalman Filter may allow to accurately determine the required heading information of the autonomous robotic platform, which may otherwise mainly be dependent on IMU measurements. Additionally, if a multi-antenna system in combination with IMU measurements enables accurate determination of coordinates in 3D space, a topological map of the operational space (e.g. garden) can be created and continuously updated to improve positioning results and optimize intelligent path planning procedures using this topological data.

An IMU is in particular an electronic device used to measure and report a specific force, angular rate, and sometimes orientation of an autonomous robotic platform using at least one from any possible combination of accelerometers, gyroscopes, and magnetometers. When magnetometers are comprised, they can be referred to as IMMUs. IMUs can play a role in maneuvering the autonomous robotic platform. IMU-enabled GPS devices can function even when GPS signals are unavailable due to factors such as tunnels, buildings, or electronic interference. IMUs can provide an independent source of information for assembling training data sets and ground truth pose and position information.

If a multi-antenna system combined with the IMU measurements enables an accurate determination of the coordinates in 3D space, a topological map of the operational space (e.g. garden) can be created and continuously updated to improve positioning results and eventually use this topological data to optimize an intelligent path planning procedure.

In this context, "providing diagnostic data" particularly refers to the process of supplying additional information about the quality or reliability of the UWB measurements to the machine-learning model. This can include a variety of different types of data, such as temperature readings, humidity levels, transceiver condition, and other relevant factors that may affect the accuracy of the UWB measurements. Alternatively or additionally, information about multi-path propagation, transmission through obstacles and/or interference of signals may be provided. By incorporating this diagnostic data into the position prediction method, it is possible to improve the accuracy of the corrected distance values and reduce the uncertainty in the predictions. Incorporating this diagnostic data into the position prediction method allows for more accurate corrected distance values and reduced uncertainty in the predictions. The goal is to improve the overall performance of the position prediction method by taking into account the impact of external factors on the UWB measurements. This can lead to more reliable and accurate position estimates, which is particularly important when operating in challenging environments or situations where there may be sources of interference or other factors that could affect the accuracy of the measurements.

The ML model can use this diagnostic data to adjust the corrections applied to the UWB-measured distance data and/or assign standard deviations to the corrected UWB-measured distance data, taking into account any (selected) relevant factors that may affect the accuracy of the measurements. This can lead to more accurate predictions of the position and/or pose of the autonomous robotic platform, as well as a better understanding of the sources of uncertainty in the predictions. Alternatively or additionally, the ML model may provide a measure for prediction quality.

According to an aspect an uncertainty of a position estimator in the vicinity of the final converged position can be provided. By providing information about the level of uncertainty in the predicted positions, it is possible to better understand the reliability of the position predictions. Alternatively or additionally, an uncertainty of a pose estimator in the vicinity of the final converged pose can be provided.

The terms "position estimator" and/or "pose estimator" particularly refer to a mathematical model or algorithm as described elsewhere herein. They may be used to estimate the position and/or pose of the autonomous robotic platform based on measurements. In the respective embodiments, the position estimator and/or pose estimator refer to the ML model used to correct the UWB-measured distance data and to predict the most likely position and/or pose of the autonomous robotic platform in the local coordinate system.

The implementation of the position estimator and/or pose estimator particularly comprises training the ML model on a dataset of UWB measurements and corresponding ground truth positions and/or poses, such that the model can learn the relationship between the measured distance and/or pose data and the true positions and/or poses of the autonomous robotic platform being tracked. Once trained, the position estimator and/or the pose estimator can be used to predict the most likely position of an object based on new UWB measurements, particularly taking into account any diagnostic data that may affect the accuracy of the measurements. The performance of the position estimator and/or pose estimator is particularly evaluated through at least one metric, and may be further refined through additional iterations of training and testing. The "uncertainty" of a position estimator and/or pose estimator particularly refers to a measure of how much the actual value of the predicted position is likely to vary from the estimated value due to measurement noise or other sources of uncertainty. In further detail, there can be different ways to quantify the uncertainty of a position estimator and/or pose estimator as described elsewhere herein. In an embodiment Quasi-Newtonian methods such as the Boyden-Fletcher-Shannon-Goldfarb algorithm can be used for solving the minimization problem. The algorithm can approximate the inverse of the Hessian matrix at each iteration step as described elsewhere herein, which in turn can be used to quantify the uncertainty of the estimator in the vicinity of the final converged position. This can provide a measure of the spread or dispersion of possible positions around the estimated position, which can be interpreted as a measure of uncertainty.

In this context, "position estimator in the vicinity of the final converged position" particularly refers to the uncertainty of the predicted position of the autonomous robotic platform near the point where the ML model has converged to a minimum value of the cost function. This information can be used to evaluate the accuracy of the position predictions and determine how reliable they are in the immediate vicinity of the final converged position. This applies to the "pose estimator in the vicinity of the final converged position" accordingly.

According to an aspect the position is predicted in a three-dimensional space. Alternatively or additionally, the pose is predicted in a three-dimensional space. This allows predicting the position and/or pose of the autonomous robotic platform in all three dimensions. This allows for more accurate predictions of the position and/or orientation (the pose) of the autonomous robotic platform, which can be particularly useful in applications where the platform is moving or operating in a complex environment with multiple obstacles or other sources of interference.

In this context, "position predicted in a three-dimensional space" refers to the ability to predict the x, y, and z coordinates of the position of the autonomous robotic platform in three-dimensional space. In further detail, predicting the position of an autonomous robotic platform in three-dimensional space particularly involves estimating not only its two-dimensional x and y coordinates on a horizontal plane but also its vertical z coordinate. This additional dimension can be important because it allows for more accurate predictions of the position and orientation of the platform, especially when it is moving or operating in complex environments such as hilly terrain.

In this context, "pose predicted in a three-dimensional space" refers to angular information being provided that indicate the pose information as a sort of orientation information of the autonomous robotic platform with respect to the beacons, tags and/or anchors. Angles may be azimuth and/or elevation angle of the autonomous robotic platform.

To implement position prediction in three-dimensional space, various techniques can be used depending on the specific application and requirements. These may comprise using sensors such as LIDAR or RADAR - particularly in addition to the UWB approach desribed elsewhere herein - to detect distances in the vertical dimension, incorporating information about the terrain or topography of the environment, or using mathematical models to estimate the z coordinate based on other available data such as the angular information. Additionally, the ML model can be trained to predict the position of the autonomous robotic platform in three-dimensional space by incorporating all relevant sensory data and information about the environment, particularly as obtained from the respective beacons and/or anchors. This applies to the pose prediction in three-dimensional space, accordingly.

The ML model used in embodiments of this method can take into account the three-dimensional nature of the position predictions and/or the pose predictions and can adjust the corrections applied to the UWB-measured distance data and/or UWB-measured pose data accordingly, taking into account factors such as height, depth, and orientation in addition to simple distance measurements. This allows for more accurate predictions of the position and orientation of the autonomous robotic platform, which can be particularly useful in applications where the platform is operating in a complex or dynamic environment with multiple sources of interference or obstacles, but also in hilly environment.

According to an aspect the position can be predicted in a three-dimensional space, and furthermore, a topological map of the operational space can be created. This allows for more accurate predictions of the position and/or orientation of the autonomous robotic platform, as well as providing a better understanding of the environment in which it is operating.

In this context, "topological map" particularly refers to a type of map that represents a digital representation of the operational space mapped onto. A topological map of the operational space can be used to understand the layout and structure of the environment in which the autonomous robotic platform is operating, including the locations of obstacles, walls, doors, and other relevant features. The movement of the autonomous robotic platform therein may be planned and/or executed. The topological map may be updated continuously or in certain training steps of the method.

The term "operational space" particularly refers to the physical environment within which the autonomous robotic platform can be designed to operate. This can comprise indoor or outdoor environments, as well as any specific areas or regions within those environments that are of particular interest to the user. The operational space can be defined based on a variety of different factors, such as the size and shape of the environment, the presence of obstacles or other sources of interference, and the intended use case for the autonomous robotic platform.

In further detail, an operational space is particularly determined by considering the specific requirements and constraints of the application in which the autonomous robotic platform will be used. For example, the size and shape of the environment may dictate the range and capabilities required of the platform, while the presence of obstacles or other sources of interference may require additional sensors or processing capabilities to enable accurate navigation and positioning. The intended use case for the autonomous robotic platform can play a role in defining the operational space, as different applications may have different requirements for mobility, manipulation, or perception.

By creating a topological map of the operational space, the position prediction method can take into account the layout and structure of the environment in which the autonomous robotic platform is operating, as well as any relevant features such as obstacles or walls. This allows for more accurate predictions of the position and orientation of the autonomous robotic platform, as well as providing a better understanding of the environment in which it is operating. On the other hand, the respective method allows to build the topological map as the distance and pose information may be used to assemble the respective information e.g., height, angular position, etc. to be mapped into a digital representation of space.

According to an aspect the topological map of the operational space is continuously updated. This allows for more accurate predictions of the position and orientation of the autonomous robotic platform, as well as providing a better understanding of the environment in which it is operating over time.

In this context, "continuously updated" refers to the process of regularly updating the topological map of the operational space based on new information about the environment in which the autonomous robotic platform is operating. This can include information about the location and size of obstacles or other relevant features, as well as any changes to the layout or structure of the environment over time.

In further detail, continuously updating the topological map of the operational space particularly involves using real-time data from various sensors on the autonomous robotic platform, such as LIDAR, GPS, IMUs or cameras, to detect and track changes in the environment over time, additionally or alternatively to the UWB-based measurement information. Alternatively or additionally, the distance information and/or the pose information from inferring the method may be used to assemble the respective topological map, but may also allow to update the topological map iteratively. This information can then be used to update the existing map with new data points, remove outdated information, and make corrections as necessary to ensure that the map remains accurate and up-to-date. Alternatively or additionally, it may allow to improve the respective details of the topological map over time when the autonomous robotic platform operates in an operational space. Regular updates to the topological map can improve the accuracy of position predictions and path planning for the autonomous robotic platform by providing more accurate and current information about the environment in which it is operating. The frequency and method of updating may depend on various factors, such as the rate of change in the environment, the complexity of the map, and the processing capabilities of the system.

According to an aspect, the machine-learning model can comprise a neural network. Therein at least some weights are at least partially modeled as normal distributions. The modeled weights may be those particularly of hidden layers of the neural network, particularly of at least two hidden layers, further in particular of a first hidden layer and of a second hidden layer. Artificial neural networks are described in detail elsewhere herein and the respective description applies here as well. It allows implementing the methods with the respective advantages, effects and features as described elsewhere herein.

The ML model can be implemented in the form of an artificial neural network (ANN). In this model, some weights can be modeled as normal distributions, which means they follow a specific probability distribution that can represent a statistic distribution of the respective positions and/or poses. Specifically, the at least partially modeled weights may be those of hidden layers within the ANN, with at least two hidden layers being present, particularly comprising a first hidden layer and a second hidden layer.

An artificial neural network (ANN) is a computational model inspired by the structure and functioning of the biological neural networks found in animals. It comprises interconnected nodes or neurons that can be organized into layers, with input, hidden, and output layers. The nodes - also called artificial neurons - within each layer can be connected to all the nodes (fully connected) or parts of the nodes in adjacent layers via connections -also called artificial synapses -, which transmit signals between them.

In an ANN, weights are assigned to these connections, representing the strength of the connection between two neurons. Some of these weights can be modeled as normal distributions, which allows for a more flexible and adaptive learning process. The respective advantages, features and effects have been described elsewhere herein and the reader's attention is referred to these passages. For matters of conciseness a big recasting of these passages is omitted.

Overall, the use of an ANN with at least partially modeled weights as normal distributions allows for improved performance and accuracy in implementing the methods described elsewhere herein. The presence of hidden layers enables the network to learn complex patterns and relationships within the data, while the multiple output neurons in the output layer enable it to make predictions or classifications based on the input data. In embodiments described in detail elsewhere herein, the ANN is able to provide at least one of position data, pose data, standard deviation regarding at least one of the two former or any other indicators for the quality of predictions.

According to an independent aspect, there is provided a computer-implemented training method configured for training a ML model configured to correct UWB-measured distance data of an autonomous robotic platform indicating the distance of the autonomous robotic platform relative to at least a first UWB beacon and a second UWB beacon and for assigning at least one quality indicator to the UWB-measured distance data indicating the quality of a certain predicted distance and/or predicted position, the method comprising the steps of: providing UWB-measured distance data indicating distances between the autonomous robotic platform and at least a first and a second UWB beacon to the machine-learning model; and/or providing UWB-measured pose data indicative of a pose of the autonomous robotic platform relative to at least a first and/or a second UWB beacon to the machine-learning model; providing diagnostic data to the machine-learning model; and providing ground truth information about the true distances by providing distance data measured by a second type of distance measurement to the machine-learning model; and/or providing ground truth information about the true pose by providing pose data measured by a second type of pose measurement to the machine-learning model.

The training method particularly provides a robust method for training a ML model, which can be used in a variety of applications, including but not limited to position prediction and autonomous navigation. It allows for the use of diagnostic data to improve the performance of the ML model, which can result in more accurate predictions of distance and/or pose. Ground truth information about the true distances and/or true pose may be provided, which can help to validate the performance of the trained ML model.

The training process can be executed on a cloud or a computer. In certain embodiments it can be performed on an autonomous robotic platform such as a mower for example. Other examples are described elsewhere herein.

The step of providing UWB-measured distance data indicating distances between the autonomous robotic platform and at least a first and a second UWB beacon to the machine-learning model particularly comprises providing raw or processed data obtained from UWB sensors mounted on the autonomous robotic platform, indicating the distances between the platform and at least two UWB beacons. This data can be used by the ML model to learn the patterns and relationships between the measured distance data and the true distances, which can improve the accuracy of the predictions made by the ML model.

In more detail, the step of providing UWB-measured distance data particularly comprises capturing the raw or processed data from the UWB sensors mounted on the autonomous robotic platform, such as transceivers or receivers (the tags). This data can comprise information about the distances between the platform and at least two UWB beacons, which are stationary or mobile objects equipped with UWB transmitters and receivers. The raw data can be processed or filtered e.g., to reduce noise or other errors before being provided to the ML model. Once the distance data is provided to the model, it can learn to recognize patterns and relationships between the measured distances and the true distances, which can improve the accuracy of its predictions. This step can be repeated multiple times with different sets of UWB beacons, varying environmental conditions and/or varying positions to train the model accordingly.

The step of providing UWB-measured pose data indicative of a pose of the autonomous robotic platform relative to at least a first and/or a second UWB beacon to the machine-learning model particularly comprises providing raw or processed data obtained from UWB sensors (the tags) mounted on the autonomous robotic platform, indicating the pose (e.g., position and orientation) of the platform with respect to at least two UWB beacons. This data can be used by the ML model to learn the patterns and relationships between the measured pose data and the true poses, which can improve the accuracy of the predictions made by the model.

In further detail and regarding implementation, providing UWB-measured pose data can comprise capturing data from UWB sensors mounted on the autonomous robotic platform that indicate the position and orientation of the platform relative to at least two UWB beacons. The raw data may undergo processing or filtering to remove noise or other sources of error before being fed into the ML model. Once integrated into the training process, the pose data can help the model learn the patterns and relationships between the measured pose data and the true poses, resulting in more accurate predictions of position and orientation. This step is particularly useful when the autonomous robotic platform needs to navigate complex environments or perform precise tasks that require knowledge of its orientation relative to surrounding objects or structures. By continuously updating the topological map of the operational space based on new information about the environment, the ML model can adapt and improve its predictions over time, leading to more reliable and efficient navigation.

The step of providing diagnostic data to the ML model can comprise providing information about the quality or reliability of the UWB measurements, such as temperature readings, humidity levels, transceiver condition, and other relevant factors that may affect the accuracy of the measurements. This data can be used by the ML model to adjust the corrections applied to the UWB-measured distance data and/or assign standard deviations to the corrected UWB-measured distance data, taking into account any (selected) relevant factors that may affect the accuracy of the measurements. This may apply to pose data accordingly.

In further detail regarding implementation, providing diagnostic data can be done by integrating additional sensors onto the autonomous robotic platform. For instance, temperature and humidity sensors can be used to measure environmental conditions that may impact UWB measurements. Transceiver condition can also be monitored through built-in diagnostics or by periodically checking for signal strength and quality. The ML model can then use this information to adjust the corrections applied to the UWB-measured distance data, taking into account any relevant factors that may affect the accuracy of the measurements. By incorporating this additional information, the model is able to make more informed predictions, leading to improved position prediction and autonomous navigation performance.

This aspect provides a robust method for training an ML model that can be applied to various applications such as position prediction and autonomous navigation. It allows for the use of diagnostic data to improve the performance of the ML model, particularly resulting in more accurate predictions. It may provide ground truth information about the true distances and/or true pose(s), which allow to train the ML model. This may lead to improved position prediction performance even under challenging conditions. By continuously updating the topological map of the operational space based on new information about the environment, the autonomous robotic platform is able to adapt and navigate more effectively in dynamic environments.

The step of providing ground truth information about the true distances by providing distance data measured by a second type of distance measurement to the ML model may involve providing raw or processed data obtained from a separate distance measurement system (e.g., LIDAR, radar) that can be used as a reference for determining the true distances between the autonomous robotic platform and the UWB beacons.

In further detail, this step particularly comprises integrating a second type of distance measurement system onto the autonomous robotic platform or placing separate distance measurement systems at known positions in the operational space for training purposes. The distance data obtained from this second measurement system can be used as ground truth information to validate the performance of the trained ML model by comparing its predictions to the true distances measured by the second system. This ground truth information can be provided directly to the ML model during training, or it can be used to evaluate the performance of the model after it has been trained and deployed in a real-world environment.

The step of providing ground truth information about the true pose by providing pose data measured by a second type of pose measurement to the ML model particularly refers to providing accurate, reliable and independent data on the pose (position and/or orientation) of the autonomous robotic platform as a reference. The second type of pose measurement can be any suitable method such as LIDAR, cameras, IMU (inertial measurement unit), etc.

In further detail and regarding implementation, the step of providing ground truth information about the true pose by using a second type of pose measurement particularly comprises integrating another sensor system onto the autonomous robotic platform that is capable of measuring its position and/or orientation accurately and reliably for training. This can comprise sensors such as LIDAR, cameras, or IMUs (inertial measurement units), which can provide independent data on the true pose of the platform. The second type of pose measurement system can be used to train the ground truth with respect to the UWB-based distance measurements to ensure accurate and reliable ground truth information and a respective quality of its predictions. The ground truth and respective UWB-measured data can (then) be provided to the ML model during training, allowing it to learn the patterns and relationships between the measured poses and the true poses, which in turn improves the accuracy of its predictions for the position of the autonomous robotic platform based on the corrected UWB-measured pose data.

According to an independent aspect, an electronic signal comprising at least a predicted position and/or a predicted pose from a position prediction method as described elsewhere herein can be provided. The electronic signal can be generated by a device implementing the respective methods for predicting the position and/or pose of an autonomous robotic platform, as described elsewhere herein, particularly based on UWB-measured distance data and alternatively or additionally UWB-measured pose data. At least one quality indicator can be assigned to the UWB-measured distance data indicating the quality of a certain predicted distance and/or predicted pose. The electronic signal can be used to control or influence the behavior of the autonomous robotic platform, for example, by providing the predicted position and/or predicted pose as input to a path planning algorithm or by directly controlling the movement of the platform.

The electronic signal can be described by the effects, advantages and/or features of any of the methods, particularly as described elsewhere herein, the autonomous robotic platform, particularly as described elsewhere herein, the data processing apparatus, particularly as described elsewhere herein, the computer program product, particularly as described elsewhere herein and the data set, particularly as described elsewhere herein. Features, even in case described in combination with other features in some embodiments may describe other respective embodiments for all or for some, particularly independent from the respective category they are described with - device, system, method or use. This may also be the other way around so that the electronic signal, its features, effects and/or advantages may describe any of the methods, particularly as described elsewhere herein, the autonomous robotic platform, particularly as described elsewhere herein, the data processing apparatus, particularly as described elsewhere herein, the computer program product, particularly as described elsewhere herein and the data set, particularly as described elsewhere herein.

According to an independent aspect, an autonomous robotic platform can be configured to perform a method as described elsewhere herein. The autonomous robotic platform can be configured to receive UWB-measured distance data and/or UWB-measured pose data from a plurality of UWB beacons, to provide diagnostic data to a position prediction method for correcting the UWB-measured distance data and/or UWB-measured pose data, and to receive an electronic signal comprising at least a predicted position and/or a predicted pose from a position prediction method as described elsewhere herein.

The autonomous robotic platform can be described by the effects, advantages and/or features of any of the methods, particularly as described elsewhere herein, the electronic signal, particularly as described elsewhere herein, the data processing apparatus, particularly as described elsewhere herein, the computer program product, particularly as described elsewhere herein and the data set, particularly as described elsewhere herein. Features, even in case described in combination with other features in some embodiments may describe other respective embodiments for all or for some, particularly independent from the respective category they are described with - device, system, method or use. This may also be the other way around so that the electronic signal, its features, effects and/or advantages may describe any of the methods, particularly as described elsewhere herein, the electronic signal, particularly as described elsewhere herein, the data processing apparatus, particularly as described elsewhere herein, the computer program product, particularly as described elsewhere herein and the data set, particularly as described elsewhere herein.

According to an independent aspect, there can be provided a data processing apparatus configured to perform a method as described elsewhere herein. The data processing apparatus may be implemented as a computer device or control unit for an autonomous robotic platform. The means for carrying out at least one of the methods described elsewhere herein may comprise hardware and/or software (machine readable instructions to perform a method when read by a machine) components configured to perform the steps described elsewhere herein.

The data processing apparatus can be described by the effects, advantages and/or features of any of the methods, particularly as described elsewhere herein, the autonomous robotic platform, particularly as described elsewhere herein, the electronic signal, particularly as described elsewhere herein, the computer program product, particularly as described elsewhere herein and the data set, particularly as described elsewhere herein. Features, even in case described in combination with other features in some embodiments may describe other respective embodiments for all or for some, particularly independent from the respective category they are described with - device, system, method or use. This may also be the other way around so that the data processing apparatus, its features, effects and/or advantages may describe any of the methods, particularly as described elsewhere herein, the autonomous robotic platform, particularly as described elsewhere herein, the electronic signal, particularly as described elsewhere herein, the computer program product, particularly as described elsewhere herein and the data set, particularly as described elsewhere herein.

A data processing apparatus particularly refers to a device or system that can process, manipulate or analyze data. A computer device particularly refers to any device capable of performing computational tasks, such as a desktop computer, laptop, tablet, smartphone, server, or any other type of electronic device capable of running software applications. A control unit for an autonomous platform particularly refers specifically to the hardware and/or software components that are capable of controlling the operation of an autonomous robotic platform.

According to an independent aspect, there can be provided a computer program product with program code - machine readable instructions - for performing at least one of the methods, particularly as described elsewhere herein, when the computer program produkt is run on a machine, particularly a processor. The computer program product may be stored on a tangible computer-readable storage medium and loaded into memory for execution by the machine, particularly the processor. The processor can be one embodiment of a data processing apparatus, which can be configured to perform at least one of the methods described elsewhere herein, particularly by executing the machine readable instructions, particularly the program code. The program code may comprise instructions for carrying out the steps described in any one of methods described elsewhere herein, such as receiving UWB-measured distance data and/or UWB-measured pose data, particularly providing diagnostic data to a position prediction method, particularly determining the most-likely position and/or the most-likely pose of the autonomous robotic platform in the local coordinate system by optimizing a cost function, and so on. The program code may also comprise instructions for displaying the predicted position and/or pose or using the predicted position and/or pose to control the movement of the autonomous robotic platform.

The computer program product can be described by the effects, advantages and/or features of any of the methods, particularly as described elsewhere herein, the autonomous robotic platform, particularly as described elsewhere herein, the electronic signal, particularly as described elsewhere herein, the data processing apparatus, particularly as described elsewhere herein and the data set, particularly as described elsewhere herein. Features, even in case described in combination with other features in some embodiments may describe other respective embodiments for all or for some, particularly independent from the respective category they are described with - device, system, method or use. This may also be the other way around so that the computer program product, its features, effects and/or advantages may describe any of the methods, particularly as described elsewhere herein, the autonomous robotic platform, particularly as described elsewhere herein, the electronic signal, particularly as described elsewhere herein, the data processing apparatus, particularly as described elsewhere herein and the data set, particularly as described elsewhere herein.

According to an independent aspect, there can be provided a dataset usable for an ML model, particularly as described elsewhere herein. The dataset may comprise at least a part of a predicted position and/or at least a part of a predicted pose obtained, particularly using at least one of the methods as described elsewhere herein. Additionally or alternatively, the training dataset for training the ML model may comprise at least one of the following: UWB-measured distance data indicating distances between the autonomous robotic platform and at least a first and a second UWB beacon to the machine-learning model; and/or UWB-measured pose data indicative of a pose of the autonomous robotic platform relative to at least a first and/or a second UWB beacon to the ML model; diagnostic data to the ML model; or ground truth information about the true distances by providing distance data measured by a second type of distance measurement to the ML model; and/or ground truth information about the true pose by providing pose data measured by a second type of pose measurement to the ML model.

The dataset can be described by the effects, advantages and/or features of any of the methods, particularly as described elsewhere herein, the autonomous robotic platform, particularly as described elsewhere herein, the electronic signal, particularly as described elsewhere herein, the data processing apparatus, particularly as described elsewhere herein, and the computer program product, particularly as described elsewhere herein. Features, even in case described in combination with other features in some embodiments may describe other respective embodiments for all or for some, particularly independent from the respective category they are described with - device, system, method or use. This may also be the other way around so that the dataset, its features, effects and/or advantages may describe any of the methods, particularly as described elsewhere herein, the autonomous robotic platform, particularly as described elsewhere herein, the electronic signal, particularly as described elsewhere herein, the data processing apparatus, particularly as described elsewhere herein and the computer program product, particularly as described elsewhere herein.

The scope of protection is determined by the content of the claims. Embodiments and further implementation examples are described by the dependent claims. In the following, for further clarification, embodiments are described with respect to the figures.

It is shown in
Fig. 1 a situation of use of an embodiment of a system comprising an autonomous robotic platform, UWB beacons and base station comprising anchors;
Fig. 2 an embodiment of a representation of corrected UWB-measured distance data of an autonomous robotic platform indicating the distance of the autonomous robotic platform relative to a set of UWB beacons and the respective position determined therefrom of the autonomous robotic platform;
Fig. 3 an embodiment of a machine learning model configured to correct UWB-measured distance data of an autonomous robotic platform indicating the distance of the autonomous robotic platform relative to UWB beacons; and
Fig. 4 an embodiment of a training method and an embodiment of a method of inference configured to correct UWB-measured distance data of an autonomous robotic platform indicating the distance of the autonomous robotic platform relative to a set of UWB beacons.

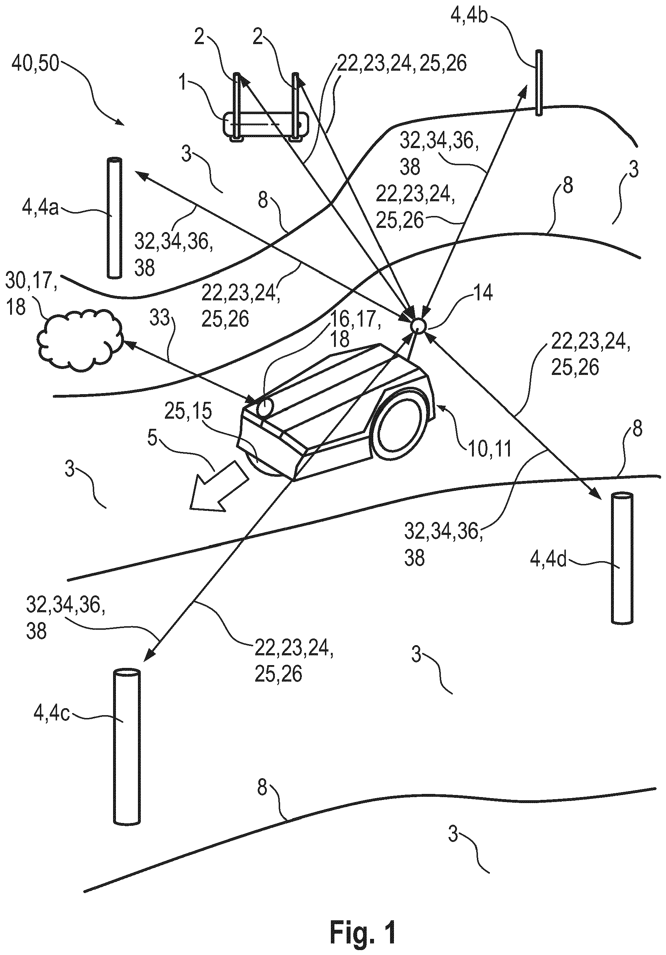

Fig. 1 shows an exemplary situation of use of an embodiment of a system comprising an autonomous robotic platform 10 comprising tags 14, UWB beacons 4 and base station 1 comprising anchors 2. Even though in the context of the shown exemplary embodiment the respective beacons 4, tags 14 and anchors 2 are assigned to a specific function, location and/or device, the respective beacons 4, anchors 2 and tags 14 may be placed at different devices and may be all or at least some of them mobile which means that they can be placed over the respective operation space 40. The tags 14 are particularly placed on the autonomous robotic platform 10, here an autonomous robotic mower 11 - for matters of simplicity just referred to as mower 11 from here -, which may operate autonomously in a garden, particularly in a hilly terrain. The hilly terrain may comprise certain levels of height 8 as height gradient lines and valleys 3 which are depicted here schematically as matter of example and for explanatory purposes.

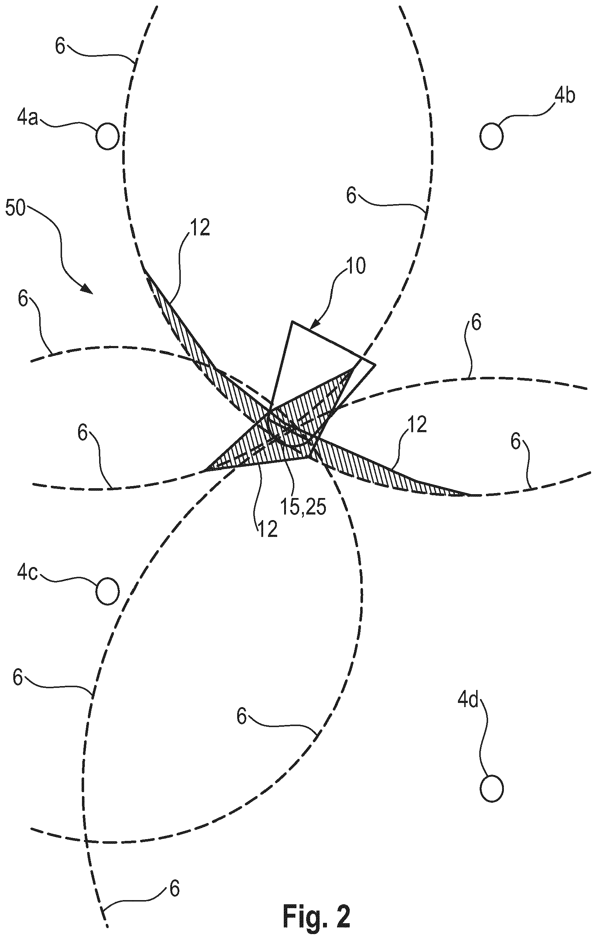

The mower 11 comprises (UWB-)tags 14 which may communicate with UWB-beacons 4 on posts and/or UWB-anchors 2 on a base station 1, usually a charging station with a defined, particularly permanent, position. The UWB-beacons 4 - here as matter of example and for explanatory purposes a first UWB-beacon 4a, a second UWB-beacon 4b, a third UWB-beacon 4c and a fourth UWB-beacon 4d are shown - can be randomly placed in the operation space 40. They may set the local coordinate system, particularly in concatenation with the anchors 2. The mower 11 can be moving in a direction 5 using a mowing blade 15 to mow the lawn. In other embodiments also cleaning robots, tray transport robots and other robots can be considered implementing the respective functionality described herein. The mower 11 comprises a data processing apparatus 16), here in particular a control unit for the mower 11 as autonomous robotic platform 10 to control at least parts of its autonomous functionality such as maneuvering, position determination, pose determination, etc. The control unit comprises the means for carrying out any of the methods 100, 200 as laid out and described with respect to any of the following FIGs. 2 to 4. The control unit may also be in communicative contact with a cloud 30, wherein a computer program product may be executed to read machine readable instructions, particularly a program code, which, when read on a machine such as the control unit and/or a server and/or computer connected to the cloud, to at least perform some of the steps of the respective methods 100, 200 as described in the following and elsewhere herein.

The computer program product 17 may be executed on the control unit of the mower. The computer program product 17 may comprise a program code for performing the method 100, 200 as described with respect to the following FIGs. 2 to 4, when the computer program product is executed on at least one processor of the control unit of the mower. In embodiments, the method steps may be distributed between the mower and the cloud 30 such that a training method 100 can be performed on a cloud and/or in a server network for better performance and training, while the respective trained machine learning model 300 may be transferred to the mower 11. Alternatively or additionally, the weights and/or distributions (corresponding to weights) resulting from training may be transferred to the machine learning model 300.

Training may be performed based on a dataset 18 usable for a machine-learning model 300. The dataset 18 can comprise at least a part of a predicted position 25 of the mower. Alternatively or additionally, the dataset 18 may comprise at least a part of a predicted pose 26 obtained using the method 200 of inference as described elsewhere herein. Alternatively or additionally, the dataset 18 may comprise a training dataset for training 108 a machine-learning model 300. The dataset 18 can comprise at least one of the following: It may comprise UWB-measured distance data 22 indicating distances between the mower 11 as autonomous robotic platform 10 and at least a first 4a and a second UWB beacon 4b. Here also the other UWB-beacons 4c, 4d may form part of the respective data. Alternatively or additionally, the data set may comprise UWB-measured pose data 23 indicative of a pose of the mower 11 as autonomous robotic platform 10 relative to at least a first 4a, a second 4b, a third 4c and/or a fourth UWB beacon 4d. The data set may comprise diagnostic data, which can be indicative about the respective UWB-sending and receiving capabilities. The ground truth information about the true distances may be comprised in the data set 18. The ground truth data may be revealed by providing distance data measured by a second type of distance measurement, which is not shown for matter of clarity and conciseness of the FIGs. Alternatively or additionally, the ground truth information about the true pose may be revealed by providing pose data measured by a second type of pose measurement, which is not shown for matter of clarity and conciseness of the FIGs.

Data from the data set 17 may be transferred between the mower 11, the base station 1, which may be adapted to perform tasks from at least one of the methods 100, 200, the base station 1 may particularly comprise a respective data analysis apparatus (not shown) 16, in form of an electronic signal 33. Here in FIG. 1 an electronic signal 33 is shown to be transmitted to the cloud 30 for matter of conciseness only. It may also be transmitted between the respective UWB-beacons 4, the mower 11, the base station 1 in any potential combination thereof.

The UWB-measured data 22 can at least partially be based on one of the following UWB-topology signals: Two Way Ranging (TWR) 32, Time Difference of Arrival (TDOA) 34, Reverse Time Difference of Arrival (RTDOA) 36 or Phase Difference of Arrival (PDOA) 38. The respective methods may be performed as described in detail elsewhere herein. PDOA 38 may use multiple antennae and can be used to essentially estimate an angle of arrival for a given UWB-measurement at a transceiver. Even though not explicitly stated before, but the data acquired via PDOA may be included in the measurement data input to the ML model 300 and may (also) include corrected angle of arrival values as well as some uncertainty measure associated with them in the output.

Fig. 2 shows an embodiment of a representation of corrected UWB-measured distance data 22 of an autonomous robotic platform indicating the distance of the autonomous robotic platform 10 relative to a set of UWB beacons 4 and the respective position 9 determined therefrom of the autonomous robotic platform 10. Herein a projection to the 2D-plane is shown for reasons of simplicity, but it may be a topological map 50 implementing the operational space 40 as it is shown in FIG. 1 into a digital representation. The local coordinate system may be established by the UWB-beacons 4, here exemplarily four UWB-beacons 4a, 4b, 4c, 4d. The mower 11 is represented as a schematic geometric form with a respective mowing blade 15. The determined position from a method 200 of inference 200 may particularly deliver a position that allows to be corrected for a respective spatial coverage of the area of the respective mowing blade 15. Distances between the position 15 of the mower 11 and any of the respective UWB-beacons 4 may be represented by radii 6 with respective UWB-beacons 4a, 4b, 4c, 4d in their respective center. As lined out elsewhere herein, the respective method 200 allows to determine a potential and most likely position being represented as an area 12. The method 200 allows for determining a respective overall position 25 based on the respective area 12 overlapping. It may furthermore provide a respective quality indicator to determine the quality of the respective predicted position.

Even though the respective methods 100, 200 are explained with respect to a position prediction they may be implemented with respect to a pose determination and prediction as well. The method(s) 100, 200, depending on the available measurements, can be used not only to determine position, which would be either the x, y coordinate in 2-Dimensions or the x, y, z coordinate in 3-Dimensions, but also for estimating the entire pose of a target such as the mower 11. In 2-Dimensions, the pose of the target comprises of x, y, and theta, where theta can be the heading of the target. In 3-Dimensions the pose comprises of the 3 coordinates as well as 3 angles (not shown). The method can be adjusted by simply redefining the cost function. The angles are not shown to reduce the complexity of the FIGs. shown.

The optimization to determine either position, distance and/or pose particularly comprises an initialization. Depending on the cost function used, this might be as simple as an x and y coordinate. Since the pose results can be used in a filtering algorithm, such as the Kalman filter - particularly as described elsewhere herein -, initialization of the optimization can be established from the Kalman filter estimates for the relevant variables.

Lastly, in order to derive a position and/or pose, the coordinates of the static anchors 2 at the base station 1 can be known (omitted here for matter of simplicity). One way to obtain the anchor 2 coordinates is once again by using nonlinear optimization to find the set of relative positions of the anchors 2 which best fit the observed distances.

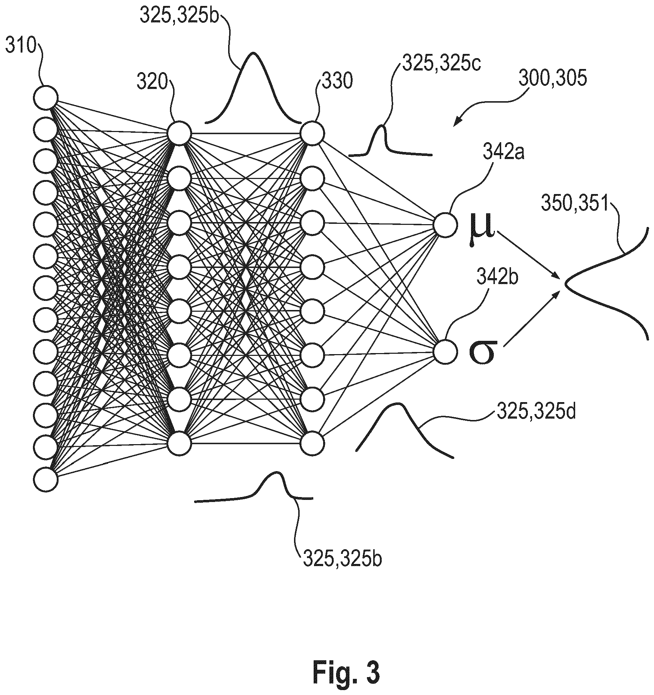

Fig. 3 shows an embodiment of a machine-learning model 300 (from here: ML model 300) configured to correct UWB-measured distance data 22 of an autonomous robotic platform 10 indicating the distance of the autonomous robotic platform 10 relative to UWB beacons 4. The ML model 300 may be an artificial neural network 305, particularly comprising an input layer with input nodes 310. These input nodes 310 can be fed with at least one of position estimation data, distance data, ranging data from the respective measurements as described elsewhere herein, temperature of the transceivers (tags 14, anchors 2 and/or beacons 4), humidity and others which may influence the measurements of the respective UWB-measured distance data 22 and/or pose data 23.

The input nodes 310 may be fully connected to a first hidden layer 320. Therein a convolution may be performed. Further hidden layers, here exemplarily represented by a second hidden layer 320, may be present in the ML model 320.

All layers may be fully connected to the forward layer (feedforward network), particularly no feed backward connections may be implemented.

An output layer may comprise particularly two nodes wherein one node 342a may provide a measure µ of the most likely predicted position 22 and wherein the other node 342b may provide a measure for the quality of the prediction, particularly in form of a standard deviation σ. The respective output for a predicted position may be provided as a normal distribution representing at least one of a distance distribution 350 and/or a pose distribution 351.

Alternatively or additionally, concatenated ANNs 305 may be provided which can provide particularly both, distance distributions 350 and/or pose distributions 351. These ANNs 305 could be trained independently from each other. Therefore, they can be independent in their basis of data provided to them.

In embodiments, the nodes of consecutive layers may be linked to each other via weights as single values. In other embodiments, the "weights" itself may be distribution functions 325. These may be different distribution functions 325a, 325b, 325c. The respective function may be determined based on the respective layer and/or the respective nodes being linked to each other. This allows to implement the respective advantages as described elsewhere herein.

In embodiments a first output neuron 342a may comprise an estimate for the residual of the UWB-measured distance data 22 for correcting the UWB-measured distance data 22. Alternatively or additionally, the ANN 305 comprises a first output neuron 342a comprising an estimate for the residual of the UWB-measured pose data 23 for correcting the UWB-measured pose data 23.

In embodiments a second output neuron 342b may provide a standard deviation σ estimate of the estimated residual. Therefore, the estimated residual may also represent the estimated distance and/or the estimated pose.

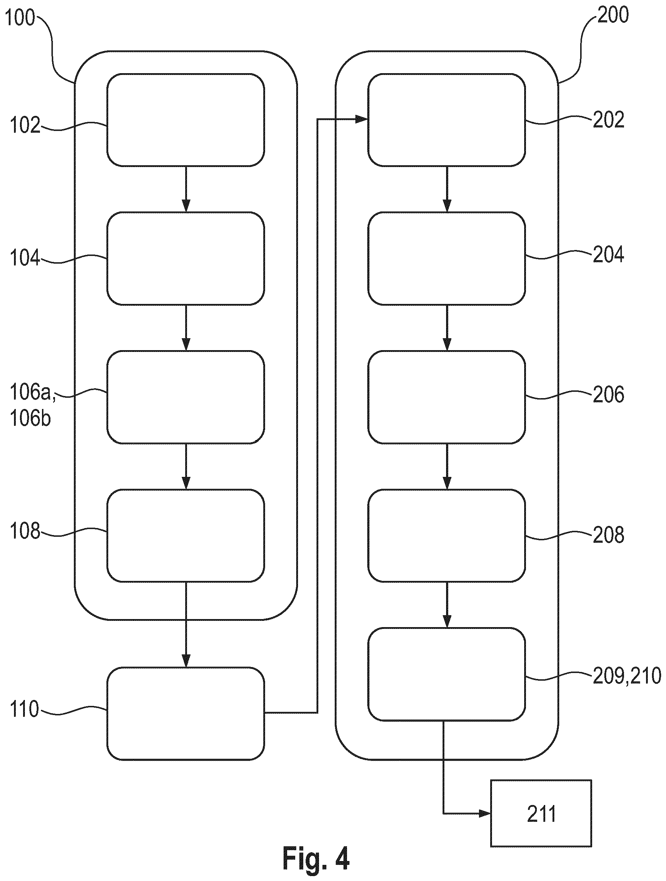

Fig. 4 shows an embodiment of a training method 100 and an embodiment of a method 200 of inference of the ML-model 300 configured to correct UWB-measured distance data 22 of an autonomous robotic platform 10 indicating the distance of the autonomous robotic platform 10 relative to at least a first UWB beacon 4a and a second UWB beacon 4b. The respective explanation given refers to the case of pose prediction as well, if not stated explicitly otherwise.

In order to train this ML model 300, using only a bunch of measurement data between transceivers along with the true measurement values that the model is supposed to predict can suffice. This measurement data might comprise at least one of raw distance estimates via Time of Flight, data from Channel Impulse Response, temperature of the transceivers etc, particularly as also stated elsewhere herein.

The computer-implemented training method 100 may be configured for training 108 a machine learning model 300 configured to correct UWB-measured distance data 22 of the autonomous robotic platform 10, particularly the mower 11, indicating the distance of the autonomous robotic platform 10 relative to the UWB beacons 4. Additionally, the method 100 may be implemented for assigning at least one quality indicator to the UWB-measured distance data 22 indicating the quality of a certain predicted distance 24, predicted position 25 and/or predicted pose 26.

The training method 100 may comprise a step of providing 102 UWB-measured distance data 22 indicating distances between the autonomous robotic platform 10 and the set of beacons 4 to the ML model 300. Alternatively or additionally, it may comprise the step of providing 102 UWB-measured pose data 23 indicative of a pose of the mower 11 relative to at least one of the beacons 4 from the set of beacons 4 to the machine-learning model 300.

The training method 100 may comprise a step of providing 104 diagnostic data to the ML model 300. The diagnostic data 29 can be provided to the method 100 for training the ML model 300 such that it can correct the UWB-measured distance data 22 and/or such that it can assign the standard deviations σ to the corrected UWB-measured distance data 24. The training method 100 may comprise a step of providing 106a ground truth information about the true distances by providing distance data measured by a second type of distance measurement to the ML model 300. Alternatively or additionally, the training method 100 may comprise a step of providing 106b ground truth information - respective data in a dataset 18 - about the true pose by providing pose data measured by a second type of pose measurement to the ML model 300.

The ML model 300, particularly in form of an ANN 305 as described with respect to FIG. 3, may adapt the weights and/or the weight distribution functions 325 accordingly, to adapt to the respective input provided as described above and elsewhere herein. In n electronic signal 33 the weights, weight distribution functions 325 and/or the dataset 18 may be distributed between respective machines of the system that are capable of processing it accordingly. These may be one or more processors that may be comprised by a base station 1, an autonomous robotic platform 10 such as a mower 11 and/or a cloud 30 such as a server, computer or respective devices of a respective network.

Thus, a computer-implemented position prediction method 200 can be implemented comprising the trained ML model 300 trained and configured to correct UWB-measured distance data 22 and/or pose data 23 of an autonomous robotic platform 10 such as the mower indicating the distance and/or pose of the autonomous robotic platform 10 relative to beacons 4 of a set of beacons. The method 200 may be implemented for assigning at least one quality indicator to the UWB-measured distance data 22 and/or pose data 23 indicating the quality of a certain predicted distance 24, predicted position 25 and/or predicted pose 26.

The method 200 may comprise a step of providing 202 to the ML model 300 UWB-measured distance data 22 indicating distances between the autonomous robotic platform 10 and at least a selection of the beacons 4 from the set of beacons 4. The distances may function as local coordinate system.

The method 200 may comprise a step of providing 202 to the ML model 300 UWB-measured pose data 22 indicative of a pose of the autonomous robotic platform 10 relative to at least one beacon 4 from the set of beacons 4.

The method 200 may comprise a step of correcting 204 the UWB-measured distance data 22 and/or UWB-measured pose data 23. This may allow transforming 206 the UWB-measured distance data 22 into distance distributions 350 by assigning the at least one quality indicator of the UWB-measured distance data 22 to the UWB-measured distance data 22. Alternatively or additionally, transforming 206 the UWB-measured pose data 23 into pose distributions 351 may be possible by assigning the at least one quality indicator of the UWB-measured pose data 23 to the UWB-measured pose data 23. The method 200 may comprise the step of determining 208 the most-likely position 25 in the local coordinate system by optimizing a cost function. Alternatively or additionally, determining 208 the most-likely pose of the autonomous robotic platform 10 in the local coordinate system may be based on optimizing a cost function. Optimizing the cost function particularly comprises minimizing a negative sum of a log likelihood. The at least one quality indicator can be a standard deviation σ assigned to the corrected UWB-measured distance data 25 and/or pose data 26. A covariance matrix can be calculated to provide an uncertainty of the prediction of the estimator. The covariance matrix can be estimated based on the inverse of a hessian matrix at a convergence point of the cost function, particularly wherein the position data 22 and/or pose data 23 is/are processed in a Kalman filter.

In yet another optional step 209, diagnostic data 29 can be provided to the method 200 for correcting the UWB-measured distance data 22 and/or for assigning the standard deviations σ to the corrected UWB-measured distance data 24.

In yet another optional step 210, an uncertainty of a position estimator in the vicinity of the final converged position can be provided. Alternatively or additionally an uncertainty of a pose estimator in the vicinity of the final converged pose can be provided.

Based on the respective method steps as described above the position and/or the pose can be predicted in a three-dimensional space. The digital representation of this three-dimensional space can be referred to as topological map 50, particularly as it may also comprise height information and information about the topology of the operational space 40 wherein the autonomous robotic platform 10, such as the mower 11, may operate. In other words, a topological map 50 of the operational space 40 can be created. The topological map 50 of the operational space 40 can be updated continuously and/or in certain steps, particularly in steps of retraining the ML model 300.

In yet another step 211 at least one of the predicted distance and/or the predicted pose may be provided to a data processing apparatus 16 such as a control unit such that a movement in a direction 5 of the autonomous robotic platform 10, particularly the mower 11, can be controlled according to a respective plan of movement following a determined trajectory in the respective topological map 50 corresponding to a respective trajectory in the operational space 40, which may be followed.

"Can" refers in particular to optional features of the invention. As a result, there are also further embodiments and/or implementation examples, which additionally or alternatively have the respective feature or characteristics.

Isolated features can also be selected from the present disclosed combinations and used to describe and/or specify the subject of the claims even in cases where there can be any structural and/or functional relationship that may exist between the characteristics.

### Reference signs

- 1: base station, particularly charging base station
- 2: UWB anchor
- 3: valley
- 4: UWB beacon
- 4a: first UWB beacon
- 4b: second UWB beacon
- 4c: third UWB beacon
- 4d: fourth UWB beacon
- 5: direction of movement
- 6: radius of distance
- 8: topological gradient line
- 10: autonomous robotic platform
- 11: mower
- 12: position propability density
- 14: UWB tag
- 15: mowing blade
- 16: data processing apparatus
- 17: computer program product
- 18: dataset
- 22: UWB-measured distance data
- 23: UWB-measured pose data
- 24: corrected UWB-measured distance data
- 25: (predicted) position
- 26: corrected UWB-measured pose data
- 30: cloud
- 32: Two Way Ranging
- 33: electronic signal
- 34: Time Difference of Arrival
- 36: Reverse Time Difference of Arrival
- 38: Phase Difference of Arrival
- 100: training method
- 102: providing UWB-measured distance data and/or pose data
- 104: providing diagnostic data
- 106a: providing ground truth information about the true distances
- 106b: providing ground truth information about the true poses
- 108: training a machine learning model
- 200: method of inference
- 202: providing to the machine-learning model UWB-measured distance data and/or pose data
- 204: correcting the UWB-measured distance data and/or UWB-measured pose data
- 206: transforming the UWB-measured distance data
- 208: determining the most-likely position and/or pose
- 209: providing diagnostic data
- 210: providing uncertainty of a position estimator in the vicinity of the final converged position
- 211: providing the predicted distance and/or the predicted pose
- 300: machine-learning model
- 305: artificial neural network
- 310: input node
- 320: first hidden layer node
- 325: weight (normal) distribution function
- 325a: first type of a weight (normal) distribution function
- 325b: second type of a weight (normal) distribution function
- 325c: third type of a weight (normal) distribution function
- 325d: fourth type of a weight (normal) distribution function
- 342a: first output neuron
- 342b: second output neuron
- 350: position (normal) distribution density
- 351: pose (normal) distribution density
- σ: standard deviation
- µ: predicted position with highest probability

## Claims

1. A computer-implemented position prediction method (200) comprising a machine-learning model (300) configured to correct UWB-measured distance data (22) and/or pose data (23) of an autonomous robotic platform (10) indicating the distance and/or pose of the autonomous robotic platform (10) relative to at least a first UWB beacon (4a) and a second UWB beacon (4b) and for assigning at least one quality indicator to the UWB-measured distance data (22) and/or pose data (23) indicating the quality of a certain predicted distance (24), predicted position (25) and/or predicted pose (26), the method (200) comprising the steps of:
- providing (202) to the machine-learning model (300) UWB-measured distance data (22) indicating distances between the autonomous robotic platform (10) and at least a first UWB beacon (4a) and a second UWB beacon (4b), the distances functioning as local coordinate system; and/or providing to the machine-learning model (300) UWB-measured pose data (22) indicative of a pose of the autonomous robotic platform (10) relative to at least a first UWB beacon (4a) and/or a second UWB beacon (4b);
- correcting (204) the UWB-measured distance data (22) and/or UWB-measured pose data (23);
- transforming (206) the UWB-measured distance data (22) into distance distributions (350) by assigning the at least one quality indicator of the UWB-measured distance data (22) to the UWB-measured distance data (22); and/or transforming (206) the UWB-measured pose data (23) into pose distributions (351) by assigning the at least one quality indicator of the UWB-measured pose data (23) to the UWB-measured pose data (23); and
- determining (208) the most-likely position (25) in the local coordinate system by optimizing a cost function; and/or determining (208) the most-likely pose of the autonomous robotic platform (10) in the local coordinate system by optimizing a cost function.

2. The method (200) according to claim 1, wherein optimizing the cost function comprises minimizing a negative sum of a log likelihood.

3. The method (200) according to any of the claims 1 or 2, wherein the at least one quality indicator is a standard deviation (σ) assigned to the corrected UWB-measured distance data (25) and/or pose data (26).

4. The method (200) according to any of the preceding claims, wherein the machine learning model comprises a neural network (300), wherein a first output neuron (342a) comprises an estimate for the residual of the UWB-measured distance data (22) for correcting the UWB-measured distance data (22); and/or wherein the neural network comprises a first output neuron (342a) comprising an estimate for the residual of the UWB-measured pose data (23) for correcting the UWB-measured pose data (23).

5. The method (200) according to any of the preceding claims, wherein the machine learning model (300) comprises a neural network (305), wherein a second output neuron (342b) provides a standard deviation (σ) estimate of the estimated residual (and therefore also for the estimated distance and/or the estimated pose).

6. The method (200) according to any of the preceding claims, wherein a covariance matrix is calculated to provide an uncertainty of the prediction of the estimator.

7. The method (200) according to claim 6, wherein the covariance matrix is estimated based on the inverse of the hessian matrix at a convergence point of the cost function.

8. The method (200) according to any of the preceding claims, wherein the position data (22) and/or pose data (23) is/are processed in a Kalman filter.

9. The method (200) according to any of the preceding claims, wherein the UWB-measured data is at least partially based on one of the following UWB-topology signals:
- Two Way Ranging (32);
- Time Difference of Arrival (34);
- Reverse Time Difference of Arrival (36); or
- Phase Difference of Arrival (38).

10. The method (200) according to any of the preceding claims, wherein diagnostic data (29) is provided to the method (200) for correcting the UWB-measured distance data (22) and/or for assigning the standard deviations (σ) to the corrected UWB-measured distance data (24).

11. The method (200) according to any of the preceding claims, wherein an uncertainty of a position estimator in the vicinity of the final converged position is provided and/or wherein an uncertainty of a pose estimator in the vicinity of the final converged pose is provided.

12. The method (200) according to any of the preceding claims, wherein the position and/or pose is/are predicted in a three-dimensional space.

13. The method (200) according to any of the preceding claims, particularly according to claim 12, wherein a topological map (50) of the operational space (40) is created.

14. The method (200) according to any of the preceding claims, particularly according to either claim 12 or 13, wherein the topological map (50) of the operational space (40) is continuously updated.

15. The method (200) according to any of the preceding claims, wherein the machine-learning model (300) comprises a neural network (305) and wherein at least some weights, particularly of hidden layers (320, 330) of the neural network (305), particularly of at least two hidden layers (320, 330), particularly of a first hidden layer (320) and of a second hidden layer (330), are at least partially modeled as normal distributions (325).

16. Computer-implemented training method (100) configured for training (108) a machine learning model (300) configured to correct UWB-measured distance data (22) of an autonomous robotic platform (10) indicating the distance of the autonomous robotic platform (10) relative to at least a first UWB beacon (4a) and a second UWB beacon (4b) and for assigning at least one quality indicator to the UWB-measured distance data (22) indicating the quality of a certain predicted distance (24), predicted position (25) and/or predicted pose (26), the method (100) comprising the steps of:
- providing (102) UWB-measured distance data (22) indicating distances between the autonomous robotic platform (10) and at least a first (4a) and a second UWB beacon (4b) to the machine-learning model (300); and/or providing (102) UWB-measured pose data (23) indicative of a pose of the autonomous robotic platform (10) relative to at least a first (4a) and/or a second UWB beacon (4b) to the machine-learning model (300);
- providing (104) diagnostic data to the machine-learning model (300); and
- providing (106a) ground truth information about the true distances by providing distance data measured by a second type of distance measurement to the machine-learning model (300); and/or providing (106b) ground truth information about the true pose by providing pose data measured by a second type of pose measurement to the machine-learning model (300).

17. Electronic signal (33) comprising at least a predicted position (25) and/or predicted pose (26) from a position prediction method (200) of any of the claims 1 to 15.

18. Autonomous robotic platform (10) configured to perform a method (100, 200) of any of the claims 1 to 16 or configured to transmit and/or to receive an electronic signal (33) according to claim 17.

19. A data processing apparatus (16), in particular a computer device or a control unit for an autonomous robotic platform (10), comprising means for carrying out the method (100, 200) of any one of claims 1 to 16.

20. A computer program product (17) comprising a program code for performing the method (100, 200) of any one of claims 1 to 16 when the computer program product is executed on a processor.

21. A dataset (18) usable for a machine-learning model (300), the dataset (18) comprising at least a part of a predicted position (25) and/or at least a part of a predicted pose (26) obtained using the method (200) of any one of claims 1 to 15; and/or a training dataset for training (108) a machine-learning model (300), the dataset (18) comprising at least one of the following:
- UWB-measured distance data (22) indicating distances between the autonomous robotic platform (10) and at least a first (4a) and a second UWB beacon (4b); and/or UWB-measured pose data (23) indicative of a pose of the autonomous robotic platform (10) relative to at least a first (4a) and/or a second UWB beacon (4b);
- diagnostic data; or
- ground truth information about the true distances by providing distance data measured by a second type of distance measurement; and/or ground truth information about the true pose by providing pose data measured by a second type of pose measurement.
